(19) Europäisches Patentamt

European Patent Office

Office européen des brevets

(11) **EP 1 609 084 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
*G06F 17/14* (2006.01)  *G10L 19/02* (2006.01)
*G06T 9/00* (2006.01)  *H04N 7/30* (2006.01)

(21) Anmeldenummer: **04740658.2**

(22) Anmeldetag: **05.07.2004**

(86) Internationale Anmeldenummer:
**PCT/EP2004/007326**

(87) Internationale Veröffentlichungsnummer:
**WO 2005/006624 (20.01.2005 Gazette 2005/03)**

(54) **VORRICHTUNG UND VERFAHREN ZUM UMSETZEN IN EINE TRANSFORMIERTE DARSTELLUNG ODER ZUM INVERSEN UMSETZEN DER TRANSFORMIERTEN DARSTELLUNG**

DEVICE AND METHOD FOR CONVERSION INTO A TRANSFORMED REPRESENTATION OR FOR INVERSELY CONVERTING THE TRANSFORMED REPRESENTATION

DISPOSITIF ET PROCEDE DE CONVERSION EN UNE REPRESENTATION TRANSFORMEE OU DE CONVERSION INVERSE DE LADITE REPRESENTATION TRANSFORMEE

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.07.2003 DE 10331803**

(43) Veröffentlichungstag der Anmeldung:
**28.12.2005 Patentblatt 2005/52**

(73) Patentinhaber: **Fraunhofer-Gesellschaft zur Förderung der angewandten Forschung e.V. 80686 München (DE)**

(72) Erfinder:
• **GEIGER, Ralf**
  **91058 Erlangen (DE)**
• **SCHULLER, Gerald**
  **99089 Erfurt (DE)**
• **SPORER, Thomas**
  **90766 Fürth (DE)**

(74) Vertreter: **Zinkler, Franz et al Schoppe, Zimmermann, Stöckeler & Zinkler Postfach 246 82043 Pullach bei München (DE)**

(56) Entgegenhaltungen:
• **GEIGER R ET AL: "AUDIO CODING BASED ON INTEGER TRANSFORMS" PREPRINTS OF PAPERS PRESENTED AT THE AES CONVENTION, XX, XX, Bd. 111, Nr. 5471, 21. September 2001 (2001-09-21), Seiten 1-8, XP009021136**
• **GEIGER R ET AL: "INTMDCT-A LINK BETWEEN PERCEPTUAL AND LOSSLESS AUDIO CODING" 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002, IEEE INTERNATIONAL CONFERENCE ON ACOUSTICS, SPEECH, AND SIGNAL PROCESSING (ICASSP), NEW YORK, NY : IEEE, US, Bd. VOL. 3 OF 4, 13. Mai 2002 (2002-05-13), Seiten II-1813, XP001097166 ISBN: 0-7803-7402-9**

**Beschreibung**

Die vorliegende Erfindung bezieht sich auf Kompressionsalgorithmen für diskrete Werte, die Audio- und/oder Bildinformationen aufweisen, und insbesondere auf Transformationsalgorithmen, die insbesondere in solchen Codierern verwendet werden sollen, welche transformationsbasiert sind, d. h. eine Quantisierung/Codierung nicht der ursprünglichen Audio- und/oder Bildsignale vornehmen, sondern vor der Quantisierung/Codierung eine Transformation in einen Spektralbereich umfassen.

Moderne Audiocodierverfahren, wie z. B. MPEG Layer3 (MP3) oder MPEG AAC verwenden Transformationen wie beispielsweise die sogenannte modifizierte diskrete Cosinustransformation (MDCT), um eine blockweise Frequenzdarstellung eines Audiosignals zu erhalten. Ein solcher Audiocodierer erhält üblicherweise einen Strom von zeitdiskreten Audio-Abtastwerten. Der Strom von Audio-Abtastwerten wird gefenstert, um einen gefensterten Block von beispielsweise 1024 oder 2048 gefensterten Audio-Abtastwerten zu erhalten. Zur Fensterung werden verschiedene Fensterfunktionen eingesetzt, wie z. B. ein Sinus-Fenster, etc.

Die gefensterten zeitdiskreten Audio-Abtastwerte werden dann mittels einer Filterbank in eine spektrale Darstellung umgesetzt. Prinzipiell kann hierzu eine Fourier-Transformation, oder aus speziellen Gründen eine Abart der Fourier-Transformation, wie z. B. eine FFT oder, wie es ausgeführt worden ist, eine MDCT eingesetzt werden. Der Block von Audio-Spektralwerten am Ausgang der Filterbank kann dann je nach Bedarf weiter verarbeitet werden. Bei den oben bezeichneten Audio-Codierern folgt eine Quantisierung der Audio-Spektralwerte, wobei die Quantisierungsstufen typischerweise so gewählt werden, daß das durch das Quantisieren eingeführt Quantisierungsrauschen unterhalb der psychoakustischen Maskierungsschwelle liegt, d. h. "wegmaskiert" wird. Die Quantisierung ist eine verlustbehaftete Codierung. Um eine weitere Datenmengenreduktion zu erhalten, werden die quantisierten Spektralwerte anschließend beispielsweise mittels einer Huffman-Codierung Entropie-codiert. Durch Hinzufügen von Seiteninformationen, wie z. B. Skalenfaktoren etc. wird aus den Entropie-codierten quantisierten Spektralwerten mittels eines Bitstrom-Multiplexers ein Bitstrom gebildet, der gespeichert oder übertragen werden kann.

Im Audio-Decodierer wird der Bitstrom mittels eines Bitstrom-Demultiplexers in codierte quantisierte Spektralwerte und Seiteninformationen aufgeteilt. Die Entropie-codierten quantisierten Spektralwerte werden zunächst Entropiedecodiert, um die quantisierten Spektralwerte zu erhalten. Die quantisierten Spektralwerte werden dann invers quantisiert, um decodierte Spektralwerte zu erhalten, die Quantisierungsrauschen aufweisen, das jedoch unterhalb der psychoakustischen Maskierungsschwelle liegt und daher unhörbar sein wird. Diese Spektralwerte werden dann mittels eines Synthese-Filterbank in eine zeitliche Darstellung umgesetzt, um zeitdiskrete decodierte Audio-Abtastwerte zu erhalten. In der Synthese-Filterbank muß ein zum Transformations-Algorithmus inverser Transformations-Algorithmus eingesetzt werden. Außerdem muß nach der Frequenz-Zeit-Rücktransformation das Fenstern rückgängig gemacht werden.

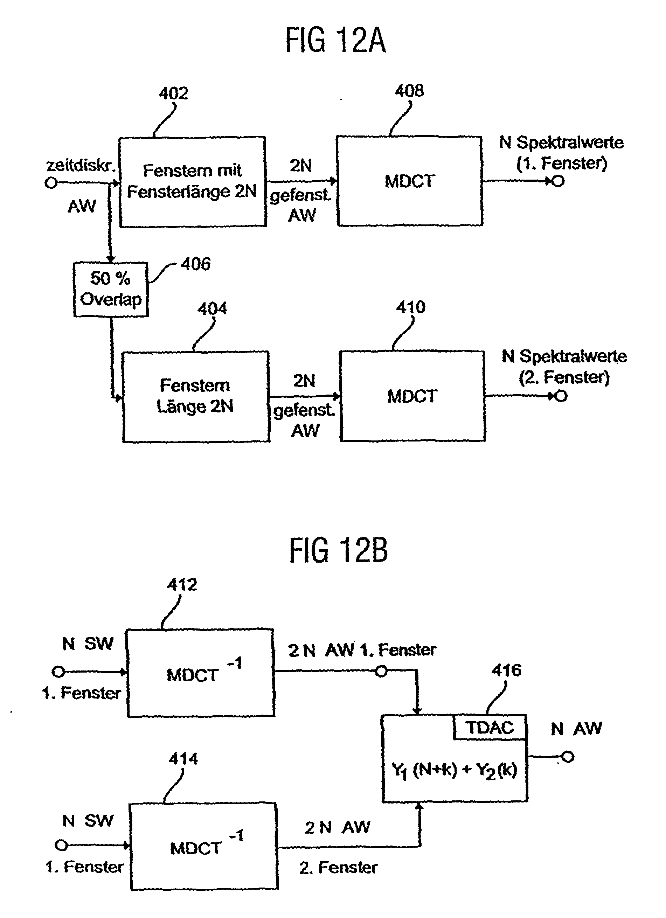

Um eine gute Frequenzselektivität zu erreichen, verwenden moderne Audio-Codierer typischerweise eine BlockÜberlappung. Ein solcher Fall ist in Fig. 12a dargestellt. Zunächst werden beispielsweise 2048 zeitdiskrete Audio-Abtastwerte genommen und mittels einer Einrichtung 402 gefenstert. Das Fenster, das die Einrichtung 402 verkörpert, hat eine Fensterlänge von 2N Abtastwerten und liefert ausgangsseitig einen Block von 2N gefensterten Abtastwerten. Um eine Fensterüberlappung zu erreichen, wird mittels einer Einrichtung 404, die lediglich aus Übersichtlichkeitsgründen in Fig. 12a getrennt von der Einrichtung 402 dargestellt ist, ein zweiter Block von 2N gefensterten Abtastwerten gebildet. Die in die Einrichtung 404 eingespeisten 2048 Abtastwerte sind jedoch nicht die an das erste Fenster unmittelbar anschließenden zeitdiskreten Audio-Abtastwerte, sondern beinhalten die zweite Hälfte der durch die Einrichtung 402 gefensterten Abtastwerte und beinhalten zusätzlich lediglich 1024 "neue" Abtastwerte. Die Überlappung ist durch eine Einrichtung 406 in Fig. 12a symbolisch dargestellt, die einen Überlappungsgrad von 50% bewirkt. Sowohl die durch die Einrichtung 402 ausgegebenen 2N gefensterten Abtastwerte als auch die durch die Einrichtung 404 ausgegebenen 2N gefensterten Abtastwerte werden dann mittels einer Einrichtung 408 bzw. 410 dem MDCT-Algorithmus unterzogen. Die Einrichtung 408 liefert gemäß dem bekannten MDCT-Algorithmus N Spektralwerte für das erste Fenster, während die Einrichtung 410 ebenfalls N Spektralwerte liefert, jedoch für das zweite Fenster, wobei zwischen dem ersten Fenster und dem zweiten Fenster eine Überlappung von 50% besteht.

Im Decodierer werden die N Spektralwerte des ersten Fensters, wie es in Fig. 12b gezeigt ist, einer Einrichtung 412, die eine inverse modifizierte diskrete Cosinustransformation durchführt, zugeführt. Dasselbe gilt für die N Spektralwerte des zweiten Fensters. Diese werden einer Einrichtung 414 zugeführt, die ebenfalls eine inverse modifizierte diskrete Cosinustransformation durchführt. Sowohl die Einrichtung 412 als auch die Einrichtung 414 liefern jeweils 2N Abtastwerte für das erste Fenster bzw. 2N Abtastwerte für das zweite Fenster.

In einer Einrichtung 416, die in Fig. 12b mit TDAC (TDAC = Time Domain Aliasing Cancellation) bezeichnet ist, wird die Tatsache berücksichtigt, daß die beiden Fenster überlappend sind. Insbesondere wird ein Abtastwert $y_1$ der zweiten Hälfte des ersten Fensters, also mit einem Index N+k, mit einem Abtastwert $Y_2$ aus der ersten Hälfte des zweiten Fensters, also mit einem Index k summiert, so daß sich ausgangsseitig, also im Decodierer, N decodierte zeitliche Abtastwerte ergeben.

Es sei darauf hingewiesen, daß durch die Funktion der Einrichtung 416, die auch als Add-Funktion bezeichnet wird, die in dem durch Fig. 12a schematisch dargestellten Codierer durchgeführte Fensterung gewissermaßen automatisch berücksichtigt wird, so daß in dem durch Fig. 12b dargestellten Decodierer keine explizite "inverse Fensterung" stattzufinden hat.

Wenn die durch die Einrichtung 402 oder 404 implementierte Fensterfunktion mit w(k) bezeichnet wird, wobei der Index k den Zeitindex darstellt, bezeichnet wird, so muß die Bedingung erfüllt sein, daß das Fenstergewicht w(k) im Quadrat addiert zu dem Fenstergewicht w(N+k) im Quadrat zusammen 1 ergibt, wobei k von 0 bis N-1 läuft. Wenn ein Sinus-Fenster verwendet wird, dessen Fenster-Gewichtungen der ersten Halbwelle der Sinus-Funktion folgen, so ist diese Bedingung immer erfüllt, da das Quadrat des Sinus und das Quadrat des Cosinus für jeden Winkel zusammen den Wert 1 ergeben.

Nachteilig an dem in Fig. 12a beschriebenen Fenster-Verfahren mit anschließender MDCT-Funktion ist die Tatsache, daß die Fensterung durch Multiplikation eines zeitdiskreten Abtastwerts, wenn an ein Sinus-Fenster gedacht wird, mit einer Gleitkommazahl erreicht wird, da der Sinus eines Winkels zwischen 0 und 180 Grad abgesehen von dem Winkel 90 Grad keine Ganzzahl ergibt. Auch wenn ganzzahlige zeitdiskrete Abtastwerte gefenstert werden, entstehen nach dem Fenstern also Gleitkommazahlen.

Daher ist, auch wenn kein psychoakustischer Codierer verwendet wird, d. h. wenn eine verlustlose Codierung erreicht werden soll, am Ausgang der Einrichtungen 408 bzw. 410 eine Quantisierung notwendig, um eine einigermaßen überschaubare Entropie-Codierung durchführen zu können.

Allgemein gesagt erhält man gegenwärtig bekannte Ganzzahltransformationen für ein verlustloses Audio- und/ oder Videocodieren durch eine Zerlegung der dort verwendeten Transformationen in Givens-Rotationen und durch Anwenden des Lifting-Schemas auf jede Givens-Rotation. Dadurch wird in jedem Schritt ein Rundungsfehler eingeführt. Für nachfolgende Stufen von Givens-Rotationen akkumuliert sich der Rundungsfehler immer mehr. Der resultierende Approximationsfehler wird insbesondere für verlustlose Audiocodieransätze problematisch, insbesondere wenn lange Transformationen verwendet werden, die beispielsweise 1.024 Spektralwerte liefern, wie es beispielsweise bei der bekannten MDCT mit Overlap and Add (MDCT = modifizierte diskrete Kosinustransformation) der Fall ist. Insbesondere im höherfrequenten Bereich, wo das Audiosignal ohnehin typischerweise eine sehr kleine Energiemenge hat, kann der Approximationsfehler schnell größer als das tatsächliche Signal werden, so daß diese Ansätze im Hinblick auf das verlustlose Codieren und insbesondere im Hinblick auf die dabei erreichbare Codiereffizienz problematisch ist.

Ganzzahlige Transformationen, also Transformationsalgorithmen, die ganzzahlige Ausgangswerte erzeugen, basieren im Hinblick auf die Audiocodierung besonders auf der bekannten DCT-IV, welche keinen Gleichanteil berücksichtigt, während ganzzahlige Transformationen für Bildanwendungen eher auf der DCT-II basieren, welche speziell die Vorkehrungen für den Gleichanteil beinhaltet. Solche ganzzahligen Transformationen sind beispielsweise in Y. Zeng, G. Bi und Z. Lin, "Integer sinusoidal transforms based on lifting factorization", in Proc. ICASSP'01, Mai 2001, S. 1.181 - 1.184, K. Komatsu und K. Sezaki, "Reversible Discrete Cosine Transform", in Proc. ICASSP, 1998, Bd. 3, S. 1.769 - 1.772, P. Hao und Q. Shi, "Matrix factorizations for reversible integer mapping", IEEE Trans. Signal Processing, Signal Processing, Bd. 49, S. 2.314 - 2.324, und J. Wang, J. Sun und S. Yu, "1-d and 2-d transforms from integers to integers", in Proc. ICASSP'03, Hongkong, April 2003, bekannt.

Das Dokument GEIGER R ET AL: "AUDIO CODING BASED ON INTEGER TRANSFORMS" PREPRINTS OF PAPERS PRESENTED AT THE AES 111th CONVENTION, Nr. 5471, 21. September 2001 (2001-09-21), Seiten 1-8, beschreibt die Anwendung von ganzzahligen Transformationen in der Audiokodierung.

Wie es ausgeführt worden ist, basieren die dort beschriebenen Ganzzahltransformationen auf der Zerlegung der Transformation in Givens-Rotationen und auf der Anwendung des bekannten Lifting-Schemas auf die Givens-Rotationen, was die Problematik der akkumulierenden Rundungsfehler mit sich bringt. Dies liegt insbesondere daran, daß innerhalb einer Transformation viele Male gerundet werden muß, d. h. nach jedem Lifting-Schritt, so daß besonders bei langen Transformationen, die entsprechend viele Lifting-Schritte mit sich bringen, besonders häufig gerundet werden muß. Wie ausgeführt, resultiert dies in einem akkumulierten Fehler und insbesondere auch in einer relativ aufwendigen Verarbeitung, da immer nach jedem Lifting-Schritt gerundet wird, um den nächsten Lifting-Schritt auszuführen.

Die Aufgabe der vorliegenden Erfindung besteht darin, ein effizienteres und genaueres Konzept zum Umsetzen von diskreten Werten in eine transformierte Darstellung und zum entsprechenden inversen Umsetzen der transformierten Darstellung zu schaffen.

Diese Aufgabe wird durch eine Vorrichtung zum Umsetzen gemäß Patentanspruch 1, ein Verfahren zum Umsetzen gemäß Patentanspruch 17, eine Vorrichtung zum inversen Umsetzen gemäß Patentanspruch 19, ein Verfahren zum inversen Umsetzen gemäß Patentanspruch 21 oder ein Computerprogramm gemäß Patentanspruch 24 gelöst.

Eine weitere Aufgabe der vorliegenden Erfindung besteht darin, eine Hin-Transformationsvorrichtung sowie eine Rück-Transformationsvorrichtung zu schaffen, welche das erfindungsgemäße Konzept zum Umsetzen bzw. das erfindungsgemäße Konzept zum inversen Umsetzen umfassen.

Diese Aufgabe wird durch die Hin-Transformationsvorrichtung gemäß Patentanspruch 16, ein Verfahren zum Hin-Transformieren gemäß Patentanspruch 18, eine Rück-Transformationsvorrichtung gemäß Patentanspruch 22 oder ein Rück-Transformationsverfahren gemäß Patentanspruch 23 oder ein Computerprogramm gemäß Patentanspruch 24 gelöst.

Der vorliegenden Erfindung liegt die Erkenntnis zugrunde, daß durch Erweiterung des eindimensionalen Lifting-Schemas in ein mehrdimensionales Lifting-Schema sowie durch kaskadiertes Ausführen von zumindest zwei solchen Lifting-Schritten einerseits der Rundungsfehler reduziert wird und andererseits die Recheneffizienz gesteigert wird. Erfindungsgemäß werden hierzu zumindest zwei Blöcke von Werten, die Audio- und/oder Bildinformationen umfassen, benötigt, welche jeweils für sich einem beliebigen Transformationsalgorithmus unterzogen werden. Erfindungsgemäß wird erst nach Durchführen des kompletten Transformationsalgorithmus gerundet. Dies bedeutet, daß erst z. B. die ausgegebenen Ergebniswerte, z. B. Spektralwerte, einer 1 Transformation bzw. die ausgegebenen Ergebniswerte einer 2 Transformation gerundet werden. Es ist nicht nötig, innerhalb der Transformation zu runden. Daher kann als 1. und 2. Transformationsvorschrift jede beliebige bereits existierende und insbesondere auch bereits ausgetestete Transformationsvorschrift in Form beispielsweise eines Programmcodes, der existiert und frei verfügbar ist, verwendet werden, ohne daß die Transformation selbst wie im Stand der Technik in einzelne Rotationen zerlegt werden muß, indem in die eigentliche Transformation eingegriffen wird.

Erfindungsgemäß wird der zweite Block gewissermaßen als Träger für die transformierte Darstellung des ersten Blocks verwendet, indem der zweite Block mit der transformierten Darstellung des ersten Blocks aufsummiert wird. Ferner wird erfindungsgemäß der erste Block gewissermaßen als Träger für eine transformierte Darstellung des zweiten Blocks verwendet, indem die transformierte Darstellung des zweiten Blocks, in der bereits die Spektralwerte des ersten Blocks enthalten sind, von dem ersten Block subtrahiert wird.

Nachdem erfindungsgemäß lediglich nach der 1. bzw. 2. Transformation gerundet wird, und nachdem die gerundeten Werte den entsprechenden Trägerwerten additiv bzw. subtraktiv überlagert werden, kann bei der inversen Umsetzung, ohne Datenverlust eine Rückgängigmachung der bei der Umsetzung durchgeführten Schritte erreicht werden, so daß sich ein Ganzzahl-Transformationsalgorithmus ergibt, der einerseits recheneffizient implementiert werden kann und bei dem andererseits keine Akkumulation von Rundungsfehlern entsteht. Dies liegt daran, daß erst nach einer kompletten 1. oder 2. Transformation gerundet wird, was zum einen die Akkumulation der Rundungsfehler eliminiert und was zum anderen die Anzahl der Rundungsschritte ganz erheblich reduziert, und zwar im Vergleich zu dem Fall, bei dem die Transformation selbst in Rotationen zerlegt wird, bei denen nach jedem Lifting-Schritt selbst - innerhalb des eigentlichen Transformationsalgorithmus - gerundet wird.

Ein Vorteil der vorliegenden Erfindung besteht darin, daß ferner jegliche konventionellen Nicht-Ganzzahl-Transformationsvorschriften verwendet werden können, da erst nach der Transformation gerundet werden muß.

Weiterhin ist die vorliegende Erfindung dahingehend vorteilhaft, daß schnelle Algorithmen, deren Aufwand O nicht gemäß $N^2$ steigt sondern lediglich N log N steigt, eingesetzt werden können. Dies ist insbesondere für Audiosignale von Bedeutung, da bei Audiosignalen der Wert N, also die Transformationslänge, relativ groß ist und beispielsweise bei den eingangsseitig beschriebenen bekannten Audiokomprimierverfahren bei 1.024 Werten liegt.

Bei einem bevorzugten Ausführungsbeispiel der vorliegenden Erfindung, bei dem eine ganzzahlige Version der bekannten Gleitkomma-MDCT-Transformation verwendet wird, ist die Transformationsvorschrift die bekannte DCT-IV-Transformation, die für die 1. und die 2. Transformation eine identische Transformationsmatrix als Transformationsvorschrift umfaßt. Ferner wird es bevorzugt, um eine vollständig ganzzahlige Transformation zu erhalten, die der MDCT mit Overlap und Add entspricht, die Fensterung der üblichen MDCT mit der Time-Domain-Aliasing-Cancellation-Funktionalität (TDAC-Funktionalität) zusammenzufassen und durch Givens-Rotationen auszudrücken, die wiederum durch ein Lifting-Schema ganzzahlig berechnet werden können, um eine vollständig ganzzahlige Version der MDCT zu erreichen.

Die der erfindungsgemäßen Umsetzungsvorrichtung zugeführten beiden Blöcke von diskreten Werten entsprechen dann den gewissermaßen Givens-rotierten Werten der überlappend gefenstersten Blöcken von zeitdiskreten Audioabtastwerten oder diskreten Bildabtastwerten oder Bild-Restwerten nach einer Prädiktion in einem modernen Videokompressionsalgorithmus, wobei im Fall von Audiodaten als Transformationsalgorithmus der DCT-IV-Algorithmus bevorzugt wird. Decodiererseitig wird als Frequenz-Zeit-Transformationsvorrichtung wieder der DCT-IV-Algorithmus bevorzugt, dem wieder eine Rotationsstufe folgt, die ein inverses Lifting-Schema durchführt, um die N codiererseitig eingeführten Rundungen, also die bei der Zeit-Frequenz-Transformation eingeführten Rundungen, verlustlos wiederzugewinnen.

Bevorzugte Ausführungsbeispiele der vorliegenden Erfindung werden nachfolgend Bezug nehmend auf die beiliegenden Zeichnungen näher erläutert. Es zeigen:

Fig. 1    ein Blockschaltbild einer erfindungsgemäßen Vorrichtung zum Umsetzen;

Fig. 2    ein Blockschaltbild einer erfindungsgemäßen Vorrichtung zum inversen Umsetzen;

Fig. 3    ein Blockschaltbild einer Vorrichtung zum Umsetzen gemäß einem bevorzugten Ausführungsbeispiel der vorliegenden Erfindung;

Fig. 4    eine Vorrichtung zum inversen Umsetzen gemäß einem bevorzugten Ausführungsbeispiel der vorliegenden Erfindung;

Fig. 5    eine Darstellung der Transformation von zwei aufeinanderfolgenden Blöcken von Werten, wie sie für die vorliegende Erfindung verwendbar ist;

Fig. 6    eine detaillierte Darstellung eines mehrdimensionalen Lifting-Schritts mit einer HinTransformationsmatrix;

Fig. 7    eine Darstellung eines mehrdimensionalen inversen Lifting-Schritts mit einer Rück-Transformationsmatrix;

Fig. 8    eine Darstellung der vorliegenden Erfindung zur Zerlegung einer DCT-IV der Länge N in zwei DCT-IV der Länge N/2; und

Fig. 9    ein Blockschaltbild einer bevorzugten Einrichtung zum Verarbeiten von zeitdiskreten Audioabtastwerten, um ganzzahlige Werte zu erhalten, aus denen ganzzahlige Spektralwerte ermittelbar sind;

Fig. 10    eine schematische Darstellung der Zerlegung einer MDCT und einer inversen MDCT in Givens-Rotationen und zwei DCT-IV-Operationen; und

Fig. 11    eine Darstellung zur Veranschaulichung der Zerlegung der MDCT mit 50-Prozent-Überlappung in Rotationen und DCT-IV-Operationen.

Fig. 12a    ein schematisches Blockschaltbild eines bekannten Codierers mit MDCT und 50-Prozent-Überlappung;

Fig. 12b    ein Blockschaltbild eines bekannten Decodierers zum Decodieren der durch Fig. 10a erzeugten Werte;

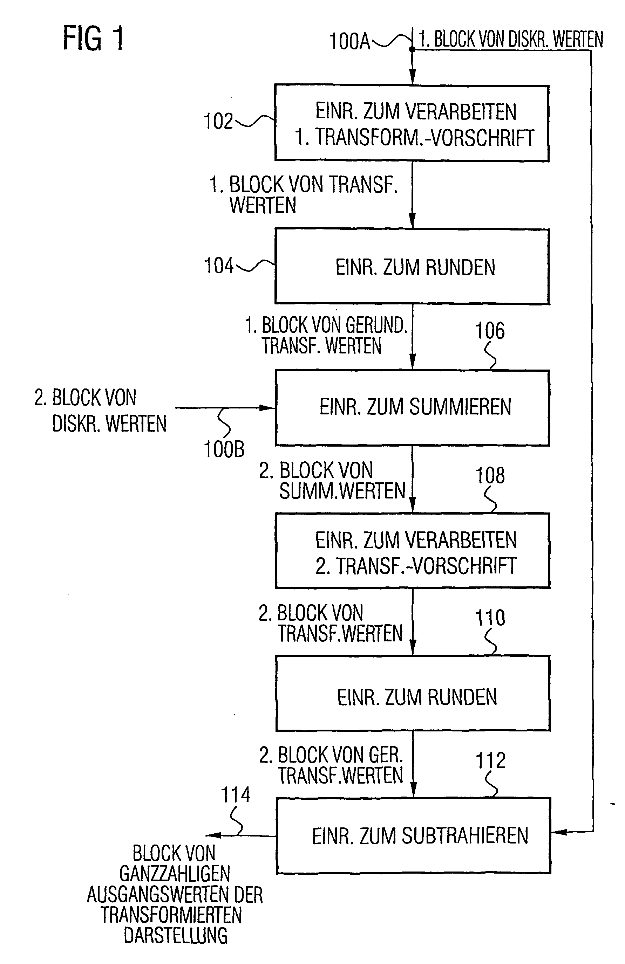

Fig. 1 zeigt eine erfindungsgemäße Vorrichtung zum Umsetzen von diskreten Werten in eine transformierte Darstellung mit ganzzahligen Werten. Die diskreten Werte werden über einen ersten Eingang 100a sowie über einen zweiten Eingang 100b in die erfindungsgemäße Vorrichtung eingespeist. Über den Eingang 100a wird ein erster Block von diskreten Werten eingespeist, während über den Eingang 100b ein zweiter Block von diskreten Werten eingespeist wird. Die diskreten Werte stellen Audiodaten oder Bilddaten bzw. Videodaten dar. Wie es nachfolgend noch dargelegt werden wird, kann der erste Block von diskreten Werten und kann der zweite Block von diskreten Werten tatsächlich zwei zeitlich aufeinanderfolgende Blöcke von Audioabtastwerten umfassen. Der erste und der zweite Block von diskreten Werten können auch zwei durch diskrete Werte dargestellte Bilder bzw. Restwerte nach einer Prädiktion oder Differenzwerte bei einer Differenzcodierung etc. umfassen. Alternativ können die beiden Blöcke von diskreten Werten jedoch einer Vorverarbeitung unterzogen worden sein, wie beispielsweise bei der ganzzahligen Implementierung der MDCT, wo der erste Block und der zweite Block von diskreten Werten durch Givens-Rotationen aus tatsächlichen gefensterten Abtastwerten erzeugt worden sind. Der erste und der zweite Block von diskreten Werten können somit durch irgendwelche Verarbeitungen, wie beispielsweise Rotationen, Permutationen, Plus/Minus-Butterflies, Skalierungen etc. von ursprünglichen Audiodaten oder Bilddaten abgeleitet sein. Dennoch enthalten der erste und der zweite Block von diskreten Werten, obgleich sie nicht direkt Audioabtastwerte oder diskretisierte Bildwerte sind, Audioinformationen bzw. Bildinformationen.

Der erste Block von diskreten Werten wird über den Eingang 100a in eine Einrichtung 102 zum Verarbeiten des ersten Blocks von diskreten Werten unter Verwendung einer 1. Transformationsvorschrift eingespeist, um an einem Ausgang der Einrichtung 102 einen ersten Block von transformierten Werten zu erhalten, wie es in Fig. 1 gezeigt ist. Dieser erste Block von transformierten Werten wird typischerweise nicht ganzzahlig sein, sondern wird Gleitkommawerte umfassen, wie sie typischerweise durch irgendeine Transformationsvorschrift, wie beispielsweise eine Fourier-Transformation, eine Laplace-Transformation, eine FFT, eine DCT, eine DST, eine MDCT, eine MDST oder irgendeine andere Transformation, wie beispielsweise eine Wavelet-Transformation mit beliebigen Basisfunktionen, erhalten werden. Der erste Block von transformierten Werten wird in eine Einrichtung 104 zum Runden des ersten Blocks von transformierten Werten eingespeist, um ausgangsseitig einen ersten Block von gerundeten transformierten Werten zu erhalten. Die Einrichtung 104 zum Runden ist ausgebildet, um irgendeine Rundungsfunktion durchzuführen, wie beispielsweise eine Rundung durch Abschneiden oder eine abhängig von dem Gleitkommawert durchzuführende Aufrundung bzw. Abrundung etc.

Die Rundungsvorschrift, die durch die Einrichtung 104 implementiert wird, ist somit dafür verantwortlich, daß der erste Block von gerundeten transformierten Werten wieder lediglich ganzzahlige Werte aufweist, deren Genauigkeit durch die von der Einrichtung 104 verwendete Rundungsvorschrift bestimmt ist. Der erste Block von gerundeten transformierten Werten wird, ebenso wie der zweite Block von diskreten Werten, der an dem zweiten Eingang 100b anliegt, einer Einrichtung 106 zum Summieren zugeführt, um einen zweiten Block von summierten Werten zu erhalten. Wenn das Audiosignal-Beispiel betrachtet wird, so ist zu sehen, daß durch die Einrichtung 106 Spektralwerte aus dem ersten Block von gerundeten transformierten Werten zu Zeitwerten aus dem zweiten Block von diskreten Werten addiert werden. Liegen die diskreten Werte des zweiten Blocks beispielsweise als Spannungswerte vor, so empfiehlt es sich, daß der erste Block von gerundeten transformierten Werten ebenfalls als Spannungsamplituden, also als Werte mit der Einheit V vorliegt. In diesem Fall ist keine Einheitenproblematik bei der Summation zu erwarten. Für Fachleute ist es jedoch offensichtlich, daß mit dem ersten Block von gerundeten transformierten Werten bzw. mit dem zweiten Block von diskreten Werten beliebige Einheitennormierungen vorgenommen werden können, dahingehend, daß sowohl der erste Block von gerundeten transformierten Werten als auch der zweite Block von diskreten Werten z. B. einheitenlos sind.

Der zweite Block von summierten Werten wird einer Einrichtung 108 zum Verarbeiten des zweiten Blocks von summierten Werten unter Verwendung einer 2. Transformationsvorschrift zugeführt, um einen zweiten Block von transformierten Werten zu erhalten. Ist die Transformationsvorschrift, die in der Einrichtung 102 verwendet wird, beispielsweise eine Zeit-Frequenz-Transformationsvorschrift, so ist die 2. Transformationsvorschrift, die im Block 108 verwendet wird, z. B. eine Frequenz-Zeit-Transformationsvorschrift. Diese Verhältnisse können jedoch auch umgekehrt sein, so daß der erste und der zweite Block von diskreten Werten beispielsweise Spektralwerte sind, so daß durch die Einrichtung 102 zum Verarbeiten unter der Transformationsvorschrift Zeitwerte erhalten werden, während durch die Einrichtung zum Verarbeiten mittels der inversen Transformationsvorschrift, also die Einrichtung 108, wieder Spektralwerte erhalten werden. Die 1. und die 2. Transformationsvorschrift können somit eine Hin- oder eine Rück-Transformationsvorschrift sein, wobei dann die inverse Transformationsvorschrift die Rück-Transformationsvorschrift bzw. die Hin-Transformationsvorschrift ist.

Der zweite Block von transformierten Werten wird, wie es in Fig. 1 gezeigt ist, in eine Einrichtung 110 zum Runden eingespeist, um einen zweiten Block von gerundeten transformierten Werten zu erhalten, welcher schließlich in eine Einrichtung 112 zum Subtrahieren eingespeist wird, um den zweiten Block von gerundeten transformierten Werten von dem ersten Block von diskreten Werten, der über den ersten Eingang 108a eingespeist wird, zu subtrahieren, um einen Block von ganzzahligen Ausgangswerten der transformierten Darstellung zu erhalten, welcher an einem Ausgang 114 ausgebbar ist. Durch Verarbeiten des Blocks von ganzzahligen Ausgangswerten der transformierten Darstellung unter Verwendung einer beliebigen dritten Transformationsvorschrift, die auch in der Einrichtung 102 verwendet worden ist oder sich von derselben unterscheidet, und durch nachfolgendes Runden des Blocks von transformierten Ausgangswerten, um einen Block von gerundeten transformierten Ausgangswerten zu erhalten, und durch anschließendes Summieren des Blocks von gerundeten transformierten Ausgangswerten und des zweiten Blocks von summierten Werten kann ein weiterer Block von ganzzahligen Ausgangswerten der transformierten Darstellung erhalten werden, der mit dem am Ausgang 114 anliegenden Block von ganzzahligen Ausgangswerten eine komplette transformierte Darstellung des ersten und des zweiten Blocks von diskreten Werten liefert.

Jedoch auch ohne die letzten drei Schritte des Verarbeitens, Rundens und Summierens, in denen der Block von ganzzahligen Ausgangswerten der transformierten Darstellung am Ausgang 114 eingesetzt wird, kann bereits ein Teil der gesamten transformierten Darstellung erhalten werden, nämlich z. B. die erste Hälfte, die, wenn sie der inversen Verarbeitung unterzogen wird, eine Rück-Berechnung des ersten und des zweiten Blocks von diskreten Werten ermöglicht.

An dieser Stelle sei darauf hingewiesen, daß je nach Transformationsvorschrift die 1., 2. und ggf. dritte Transformationsvorschrift identisch sein können. Dies ist beispielsweise bei der DCT-IV der Fall. Würde als 1. Transformationsvorschrift eine FFT eingesetzt werden, so könnte als zweite (inverse) Transformationsvorschrift die IFFT, die nicht identisch zur FFT ist, verwendet werden.

Aus rechentechnischen Gründen wird es bevorzugt, die Transformationsvorschrift in Form einer Matrix bereitzustellen, welche dann, wenn die Anzahl der diskreten Werte des ersten Blocks gleich der Anzahl der diskreten Werte des zweiten Blocks ist, eine quadratische NxN-Matrix ist, wenn die Anzahl der diskreten Werte des ersten Blocks und die Anzahl der diskreten Werte des zweiten Blocks jeweils gleich N sind.

Die Einrichtungen 104 und 110 zum Runden sind bei einem bevorzugten Ausführungsbeispiel der vorliegenden Erfindung ausgebildet, um gemäß einer Rundungsfunktion zu runden, die gerundete Ergebnisse liefert, deren Genauigkeit geringer als eine einem Rechner, der die in Fig. 1 gezeigten Funktionalitäten ausführt, inhärente Maschinengenauigkeit ist. Bezüglich der Rundungsfunktion sei darauf hingewiesen, dass dieselbe lediglich bei einem bevorzugten Ausführungsbeispiel eine nicht-ganzzahlige Zahl auf die nächste größere oder kleinere Ganzzahl abbildet. Die Rundungsfunktion kann genauso auch auf andere Ganzzahlen abbilden, wie beispielsweise die Zahl 17,7 auf die Zahl 10 oder auf die Zahl 20, solange die Rundungsfunktion eine Verringerung der Genauigkeit der zu rundenden Zahl bewirkt. Beim obigen Beispiel ist die ungerundete Zahl eine Zahl mit einer Stelle hinter dem Komma, während die gerundete Zahl eine Zahl ist, die keine Stelle mehr hinter dem Komma hat.

Obgleich in Fig. 1 die Einrichtung 102 zum Verarbeiten unter Verwendung der 1. Transformationsvorschrift und die Einrichtung 108 zum Verarbeiten unter Verwendung der 2. Transformationsvorschrift als separate Einrichtungen gezeigt sind, sei darauf hingewiesen, daß in einer konkreten Implementierung lediglich eine Transformationsfunktionseinheit vorhanden sein kann, welche, gesteuert von einer speziellen Ablaufsteuerung, zunächst den ersten Block von diskreten Werten transformiert und dann, zum entsprechenden Zeitpunkt des Algorithmus, den zweiten Block von summierten Werten invers transformiert. Dann wären die erste und die zweite Transformationsvorschrift identisch. Dasselbe gilt für die beiden Einrichtungen 104, 110 zum Runden. Auch diese müssen nicht als getrennte Einrichtungen vorgesehen sein, sondern können durch eine Rundungsfunktionseinheit implementiert werden, welche wieder gesteuert von der Ablaufsteuerung je nach Anforderung des Algorithmus zunächst den ersten Block von transformierten Werten rundet und dann den zweiten Block von transformierten Werten rundet.

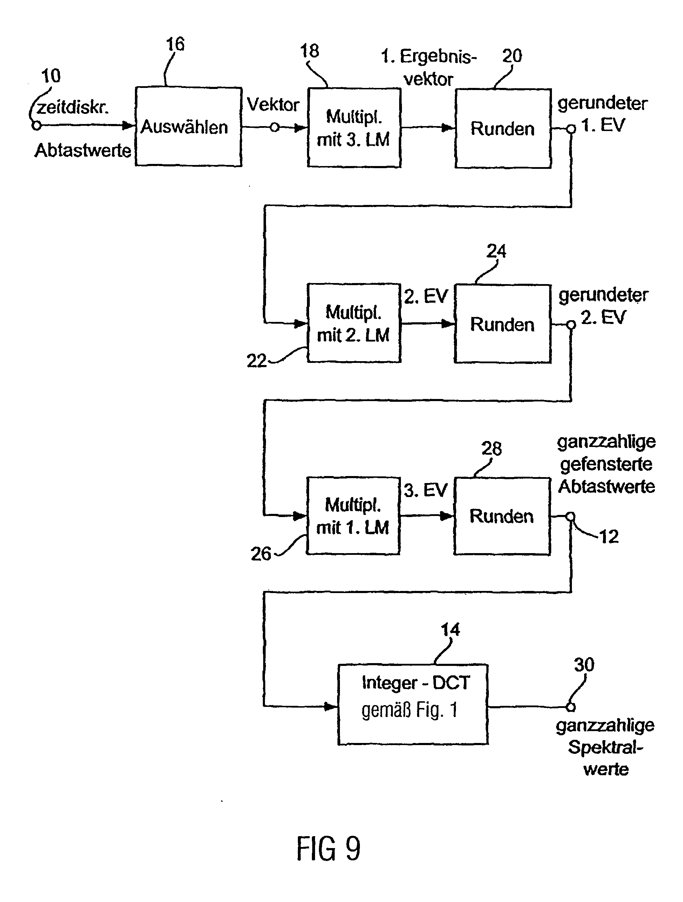

Bei einem bevorzugten Ausführungsbeispiel der vorliegenden Erfindung sind der erste Block von diskreten Werten und der zweite Block von diskreten Werten die ganzzahligen gefensterten Abtastwerte, wie sie am Ausgang des Blocks 28 in Fig. 9, auf den später eingegangen wird, erhalten werden. Die Ganzzahl-DCT im Block 14 von Fig. 9 wird dann durch den in Fig. 1 gezeigten Ganzzahl-Algorithmus implementiert, derart, daß die transformierte Darstellung am Beispiel des Audiosignals, auf das sich Fig. 9 bezieht, die ganzzahligen Spektralwerte am Ausgang 30 der in Fig. 9 gezeigten Vorrichtung darstellt.

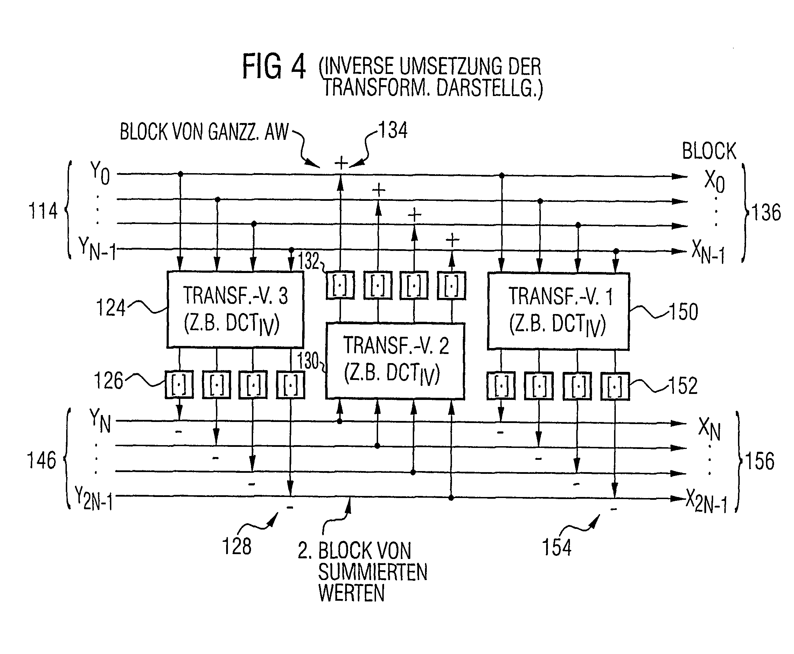

Nachfolgend wird anhand von Fig. zu 2 eine Fig. 1 korrespondierende Einrichtung zum inversen Umsetzen dargestellt, bei der neben dem Block von ganzzahligen ausgangswerten am Ausgang des Blocks 112 von Fig. 1 auch der zweite Block von summierten werten am Ausgang der Einrichtung 106 von Fig. 1 verwendet werden. Bezugnehmend auf die nachfolgend noch detailliert erläuterte Fig. 4 entspricht dies dem Fall, dass lediglich die Blöcke 150 und 130 vorhanden sind, nicht aber der Transformationsblock 124.

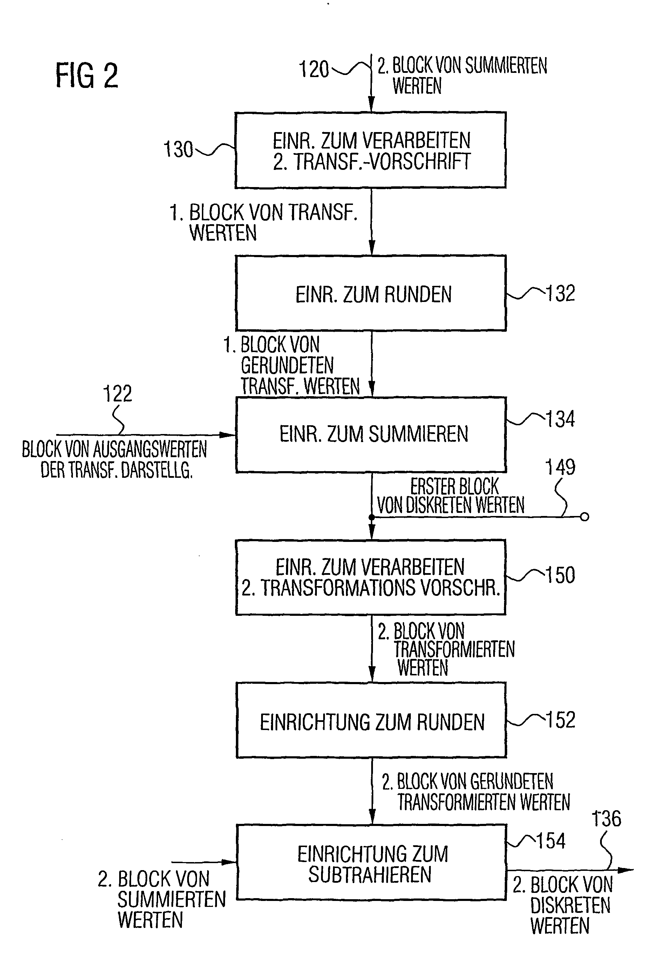

Fig. 2 zeigt eine erfindungsgemäße Vorrichtung zum inversen Umsetzen eines Blocks von ganzzahligen Ausgangswerten der transformierten Darstellung, wie sie am Ausgang 114 von Fig. 1 erhalten wird, und des zweiten Blocks von summierten Werten. Der 2. Block von summierten Werten wird in einen Eingang 120 der in Fig. 2 gezeigten Vorrichtung zum inversen Umsetzen eingespeist. Der Block von Ausgangswerten der transformierten Darstellung wird in einen weiteren Eingang 122 der Vorrichtung zum inversen Umsetzen eingespeist.

Der 2. Block von summierten Werten wird einer Einrichtung 130 zum Verarbeiten dieses Blocks unter Verwendung der 2. Transformationsvorschrift eingespeist, wenn die zuletzt verwendete Transformationsvorschrift beim Codieren die 2. Transformationsvorschrift war. Die Einrichtung 130 liefert ausgangsseitig einen ersten Block von transformierten Werten, welcher einer Einrichtung 132 zum Runden zugeführt wird, welche ausgangsseitig wiederum einen ersten Block von gerundeten transformierten Werten erzeugt. Der erste Block von gerundeten transformierten Werten wird dann mittels einer Einrichtung 134 von dem Block von Ausgangswerten der transformierten Darstellung subtrahiert, um den ersten Block von diskreten Werten an einem ersten Ausgang 149 der Vorrichtung von Fig. 2 zu erhalten.

Dieser erste Block von diskreten Werten wird einer Einrichtung 150 zum Verarbeiten dieses Blocks unter Verwendung der 1. Transformationsvorschrift zugeführt, um einen zweiten Block von transformierten Werten am Ausgang der Einrichtung 150 zu erhalten. Dieser zweite Block von transformierten subtrahierten Werten wird wiederum in der Einrichtung 152 gerundet, um einen zweiten Block von gerundeten transformierten Werten zu erhalten. Dieser zweite Block von gerundeten transformierten Werten wird von dem eingangsseitig gelieferten 2. Block von summierten Werten, der über den Eingang 120 eingegeben worden ist, subtrahiert, um ausgangsseitig einen zweiten Block von diskreten Werten an einem Ausgang 136 zu erhalten.

Im Hinblick auf das Verhältnis von 1., 2. und 3. Transformationsvorschrift sowie im Hinblick auf die spezielle Implementierung der einzelnen Funktionsblöcke in Fig. 2 durch gemeinsame Funktionseinheiten und eine entsprechende Ablaufsteuerung/Zwischenspeicherung wird auf die Bezug nehmend auf Fig. 1 gegebenen Ausführungen verwiesen.

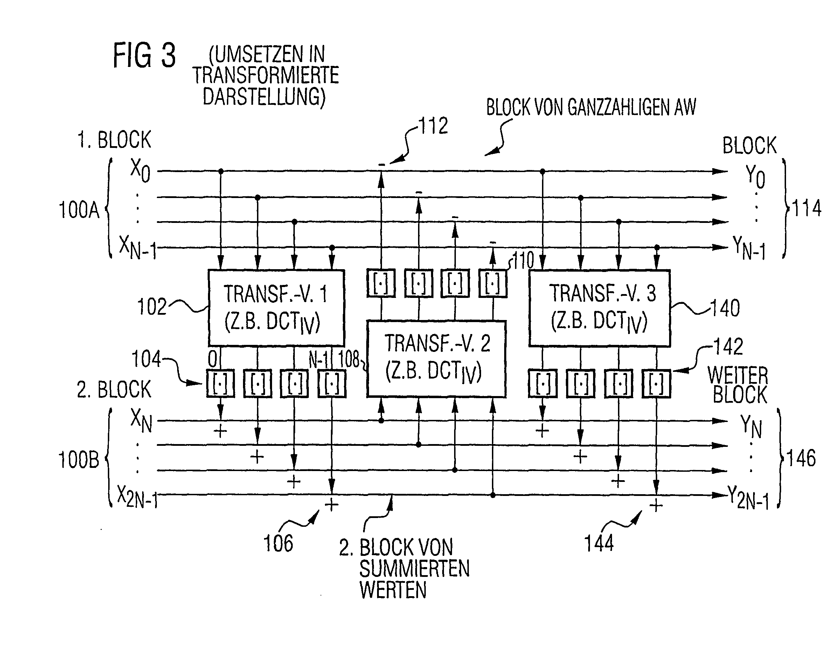

Nachfolgend wird Bezug nehmend auf Fig. 3 ein bevorzugtes Ausführungsbeispiel der in Fig. 1 allgemein dargestellten Vorrichtung zum Umsetzen in eine transformierte Darstellung dargelegt. Das Ausführungsbeispiel in Fig. 1 umfaßt eine weitere Transformation/Rundung im Vergleich zu Fig. 1, um aus dem zweiten Block von summierten Werten den weiteren Block von ganzzahligen Ausgangswerten zu erzeugen.

Der erste Eingang 100a umfaßt N Eingangsleitungen $x_0, \ldots, x_{N-1}$ zum Eingeben von N Werten des ersten Blocks von diskreten Werten. Der zweite Eingang 100b umfaßt ebenfalls N Leitungen zum Eingeben der N Werte $x_N, \ldots, x_{2N-1}$ des zweiten Blocks von diskreten Werten. Die Einrichtung 102 von Fig. 1 ist in Fig. 3 als DCT-IV-Transformierer gezeichnet. Der DCT-Transformierer 102 ist ausgebildet, um aus N Eingangswerten N Ausgangswerte zu erzeugen, von denen dann jeder, wie es in Fig. 3 durch die Einrichtung 104 gezeigt ist, durch die Rundungsvorschrift, die mit "[.]" bezeichnet ist, gerundet wird. Die Einrichtung 106 zum Summieren ist derart dargestellt, daß eine werteweise Aufsummation stattfindet. Dies bedeutet, daß der Ausgangswert der Einrichtung 102 mit dem Index 0 mit dem ersten Wert des zweiten Blocks von diskreten Werten, der den Index N hat, summiert wird. Allgemein wird somit der Wert des ersten Blocks von gerundeten transformierten Werten am Ausgang der Rundungseinrichtung 104 mit einer Ordnungszahl i mit dem diskreten Wert des zweiten Blocks von Ausgangswerten mit einer Ordnungszahl N+i einzeln summiert, wobei i ein Laufindex ist, der sich von 0 bis N-1 erstreckt.

Die Einrichtung 108 zum Verarbeiten unter Verwendung der 2. Transformationsvorschrift ist ebenfalls als DCT-IV-Transformierer gezeichnet. Die Einrichtung 112 zum Subtrahieren ist ebenfalls bei dem in Fig. 3 gezeigten bevorzugten Ausführungsbeispiel ausgebildet, um eine werteweise Subtraktion durchzuführen, und zwar dahingehend, daß die Ausgangswerte des Runders 110, also die Werte des zweiten Blocks von gerundeten transformierten Werten von dem ersten Block von diskreten Werten einzeln subtrahiert werden. Bei dem in Fig. 3 gezeigten Ausführungsbeispiel wird es bevorzugt, eine entsprechende Subtraktion durchzuführen, dahingehend, daß ein Wert des zweiten Blocks mit einer Ordnungszahl $N+i$ von einem Wert des ersten Blocks mit der Ordnungszahl $i$ subtrahiert wird, wobei $i$ wieder von 0 bis $N-1$ läuft. Alternativ können jedoch auch andere Summationen/Subtraktionen durchgeführt werden, dahingehend, daß beispielsweise ein Wert eines Blocks mit der Ordnungszahl $N-1$ von dem Wert des anderen Blocks mit der Ordnungszahl $N$ subtrahiert wird, solange dies entsprechend bei der inversen Umsetzung berücksichtigt wird.

Die Einrichtung 112 zum Subtrahieren liefert ausgangsseitig bereits einen Block von ganzzahligen Ausgangswerten der transformierten Darstellung, also die ganzzahligen Ausgangswerten $y_0$ bis $y_{N-1}$ der transformierten Darstellung. Um auch, falls dies optional erwünscht ist, die restlichen ganzzahligen Ausgangswerte der transformierten Darstellung, also den weiteren Block $y_N$ bis $y_{2N-1}$ zu erhalten, wird der Block von ganzzahligen Ausgangswerten der transformierten Darstellung, der an dem Ausgang 114 anliegt, einer Transformation unter Verwendung der dritten Transformationsvorschrift durch den Hin-Transformierer 140 unterzogen, wobei die Ausgangswerte desselben wiederum gerundet werden, wie es durch eine Rundungseinrichtung 142 dargestellt ist, um nunmehr einer Addition dieser Werte mit dem zweiten Block von summierten Werten am Ausgang des Summierers 106 durchzuführen, wie es durch das Bezugszeichen 144 in Fig. 3 dargestellt ist. Die Ausgangswerte des Summierers 144 stellen dann einen weiteren Block 146 von ganzzahligen Ausgangswerten der transformierten Darstellung dar, die mit $Y_N$ bis $Y_{2N-1}$ bezeichnet sind.

Nachfolgend wird Bezug nehmend auf Fig. 4 eine erfindungsgemäße Vorrichtung zum inversen Umsetzen der transformierten Darstellung gemäß einem bevorzugten Ausführungsbeispiel dargelegt. Es sei darauf hingewiesen, daß durch die in Fig. 4 dargestellte Vorrichtung die durch die in Fig. 3 dargestellte Vorrichtung ausgeführten Operationen verlustlos rückgängig gemacht werden. Fig. 4 entspricht Fig. 2 bis auf die zusätzliche Transformations/Rundungsstufe, um aus dem weiteren Block von transformierten Ausgangswerten den zweiten Block von summierten Werten zu erzeugen, der bei dem in Fig. 2 gezeigten Ausführungsbeispiel in den Eingang 120 eingespeist wird. Es sei darauf hingewiesen, daß die Funktion des Addierens durch die Funktion des Subtrahierens jeweils umgekehrt wird. Ferner sei darauf hingewiesen, daß ein Addierer/Subtrahierer-Paar (144 von Fig. 3 und 128 in Fig. 4) auch mit hinsichtlich des Vorzeichens invertierten Eigangsgrößen beaufschlagt werden kann, so daß der Addierer 144 dann, wenn eine Gruppe von Eingangsgrößen im Vergleich zu dem gezeigten Fall mit negativem Vorzeichen beaufschlagt ist, eigentlich eine Subtraktionsoperation durchführt, solange dies bei dem Gegenstück (128 in Fig. 4) berücksichtigt wird, den dann eigentlich eine Additionsoperation ausführen würde.

Der in Fig. 4 gezeigte Subtrahierer 128, der Addierer 134 sowie der weitere Subtrahierer 154 sind wieder ausgebildet, um eine einzelwertweise Addition/Subtraktion auszuführen, wobei wieder dieselbe Ordnungszahl-Verarbeitung verwendet wird, wie sie auch Bezug nehmend auf Fig. 3 dargelegt worden ist. Würde in Fig. 3 eine andere Ordnungszahl-Verwendung eingesetzt werden, als sie gezeigt ist, so würde dies in Fig. 4 entsprechend berücksichtigt werden.

Am Ausgang des Subtrahierers 134 liegt bereits der erste Block von diskreten Werten 136 vor, die mit $x_0$ bis $x_{N-1}$ bezeichnet sind. Um auch den Rest der rücktransformierten Darstellung zu erhalten, wird der erste Block von diskreten Werten dem Transformierer 150, der mit der ersten Transformationsvorschrift arbeitet, zugeführt, dessen ausgangsseitige Werte durch den Runder 152 gerundet werden und von dem zweiten Block von subtrahierten Werten am Ausgang des Subtrahierers 128 subtrahiert werden, um schließlich auch den zweiten Block von diskreten Werten 156, die mit $x_N$, ..., $x_{2N-1}$ bezeichnet sind, zu erhalten.

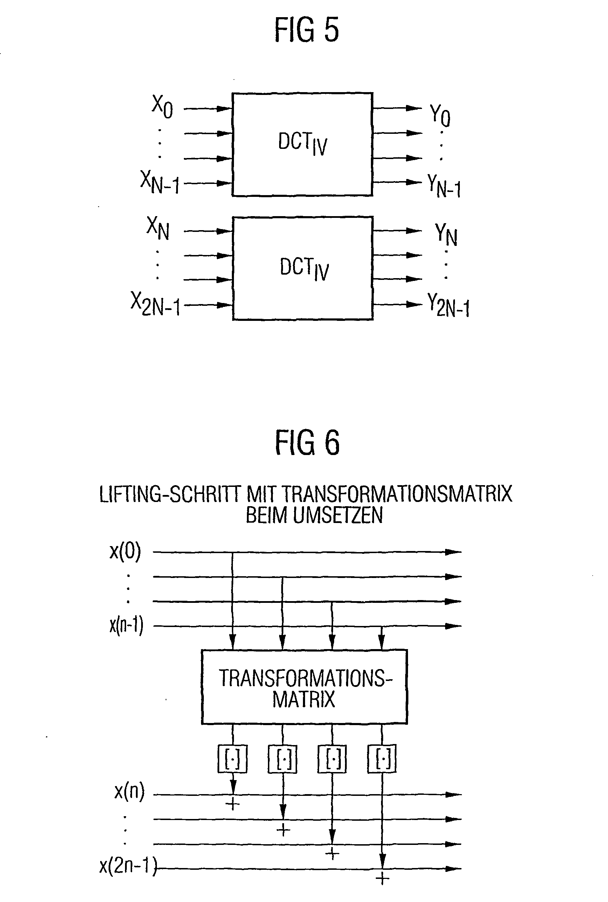

Nachfolgend wird Bezug nehmend auf die Fig. 5 - 8 der mathematische Hintergrund der für die erfindungsgemäßen Vorrichtungen, wie sie anhand der Fig. 1 - 4 dargelegt worden sind, beleuchtet. Durch die erfindungsgemäß dargestellte Vorrichtung zum Umsetzen bzw. zum inversen Umsetzen werden Ganzzahl-Transformationsverfahren für eine verlustfreie Audiocodierung geschaffen, bei denen der Approximationsfehler reduziert ist. Darüber hinaus wird auch der Berechnungsaufwand dahingehend berücksichtigt, daß nicht mehr auf den bekannten Lösungsansatz des Anwendens des Lifting-Schemas auf jede Givens-Rotation aufgebaut wird, wobei hier immer triviale Summen-Differenz-Butterflies auftreten. Diese erhöhen nämlich beträchtlich den Rechenaufwand im Vergleich zu der ursprünglichen nicht-ganzzahligen Version der nachzubildenden Transformation.

Üblicherweise wird das Lifting-Schema verwendet, um eine invertierbare ganzzahlige Approximation einer Givens-Rotation zu erhalten.

$$\begin{pmatrix} \cos \alpha & -\sin \alpha \\ \sin \alpha & \cos \alpha \end{pmatrix} \cong \begin{pmatrix} 1 & \dfrac{\cos \alpha - 1}{\sin \alpha} \\ 0 & 1 \end{pmatrix} \begin{pmatrix} 1 & 0 \\ \sin \alpha & 1 \end{pmatrix} \begin{pmatrix} 1 & \dfrac{\cos \alpha - 1}{\sin \alpha} \\ 0 & 1 \end{pmatrix}$$

Diese ganzzahlige Approximation wird erreicht, indem eine Rundungsfunktion nach jeder Addition, also nach jedem Lifting-Schritt, verwendet wird.

Das Lifting-Schema kann ebenfalls für eine invertierbare ganzzahlige Approximation bestimmter Skalierungsoperationen eingesetzt werden. In der Fachveröffentlichung R. Geiger und G. Schuller, "Integer low delay and MDCT filter banks" Proc. of the Asilomar Conf. on Signals, Systems and Computers, 2002, ist die nachfolgende Lifting-Zerlegung einer 2x2-Skalierungsmatrix mit einer Determinante gleich 1 dargelegt und beschrieben:

$$\begin{pmatrix} d & 0 \\ 0 & d^{-1} \end{pmatrix} = \begin{pmatrix} -1 & 0 \\ d^{-1} & 1 \end{pmatrix} \begin{pmatrix} 1 & -d \\ 0 & 1 \end{pmatrix} \begin{pmatrix} 0 & 1 \\ 1 & d^{-1} \end{pmatrix}$$

Erfindungsgemäß wird diese Lifting-Zerlegung, die eindimensional ist, also die sich lediglich auf eine 2x2-Skalierungsmatrix bezieht, in den mehrdimensionalen Fall erweitert. Im einzelnen werden alle Werte aus der vorstehenden Gleichung durch nxn-Matrizen ersetzt, wobei n, also die Anzahl der diskreten Werte eines Blocks, größer oder gleich 2 ist. Somit ergibt sich, daß für jede beliebige nxn-Matrix T, die vorzugsweise invertierbar sein soll, die folgende Zerlegung in 2n x 2n-Blockmatrizen möglich ist, wobei $E_n$ die n x n-Einheitsmatrix beschreibt:

$$\begin{pmatrix} T & 0 \\ 0 & T^{-1} \end{pmatrix} = \begin{pmatrix} -E_n & 0 \\ T^{-1} & E_n \end{pmatrix} \begin{pmatrix} E_n & -T \\ 0 & E_n \end{pmatrix} \begin{pmatrix} 0 & E_n \\ E_n & T^{-1} \end{pmatrix}$$

Neben einfachen Operationen, wie Permutationen oder Multiplikationen mit -1 haben alle drei Blöcke dieser Zerlegung die folgende allgemeine Struktur

$$\begin{pmatrix} E_n & 0 \\ A & E_n \end{pmatrix}$$

Für diese 2n x 2n-Blockmatrix kann ein erfindungsgemäß verallgemeinertes Lifting-Schema verwendet werden, das nachfolgend auch als multidimensionales Lifting bezeichnet wird.

Für einen Vektor der Werte x = $(x_0, ..., x_{2n-1})$ liefert die Anwendung dieser Blockmatrix folgende Gleichung:

$$\begin{pmatrix} E_n & 0 \\ A & E_n \end{pmatrix} (x_0, \ldots, x_{2n-1})^t = ((x_0, \ldots, x_{n-1}), (x_n, \ldots, x_{2n-1}) + A \cdot (x_0, \ldots, x_{n-1})^t)$$

Es sei darauf hingewiesen, daß auf der rechten Seite der vorstehenden Gleichung ein Vektor steht, dessen Dimension, also dessen Anzahl von Zeilen, gleich 2n ist. Die ersten n-Komponenten, also die Komponenten von 0 bis n-1, entsprechen $x_0$ bis $x_{n-1}$. Die zweiten n-Komponenten, also die zweite Hälfte des Vektors, der sich auf der rechten Seite von der vorstehenden Gleichung ergibt, sind gleich einer Summe des zweiten Blocks von diskreten Werten, also $x_n, ..., x_{2n-1}$, jedoch nunmehr summiert mit der Multiplikation der Matrix A, die der Transformationsmatrix von Fig. 1 - 4 entspricht, und dem ersten Block von diskreten Werten $x_0, ..., x_{n-1}$. Die Transformationsmatrix stellt die erste, zweite bzw. dritte Transformationsvorschrift dar.

Ähnlich zu dem üblichen Lifting-Schema mit 2 x 2-Matrizen der Form

$$\begin{pmatrix} 1 & a \\ 0 & 1 \end{pmatrix}$$

können diese 2n x 2n-Matrizen für invertierbare Ganzzahl-Approximationen der Transformation T folgendermaßen verwendet werden. Für ganzzahlige Eingangswerte $(x_0, ..., x_{2n-1})$ werden die Gleitkommaausgangswerte $(Y_0, ..., Y_{n-1}) = A \cdot (x_0, ..., x_{n-1})$ gerundet, und zwar auf ganzzahlige Werte, bevor sie zu den ganzzahligen Werten $(x_n, ... , x_{2n-1})$ addiert werden. Die Inverse der Blockmatrix ergibt sich folgendermaßen:

$$\begin{pmatrix} E_n & 0 \\ A & E_n \end{pmatrix}^{-1} = \begin{pmatrix} E_n & 0 \\ -A & E_n \end{pmatrix}$$

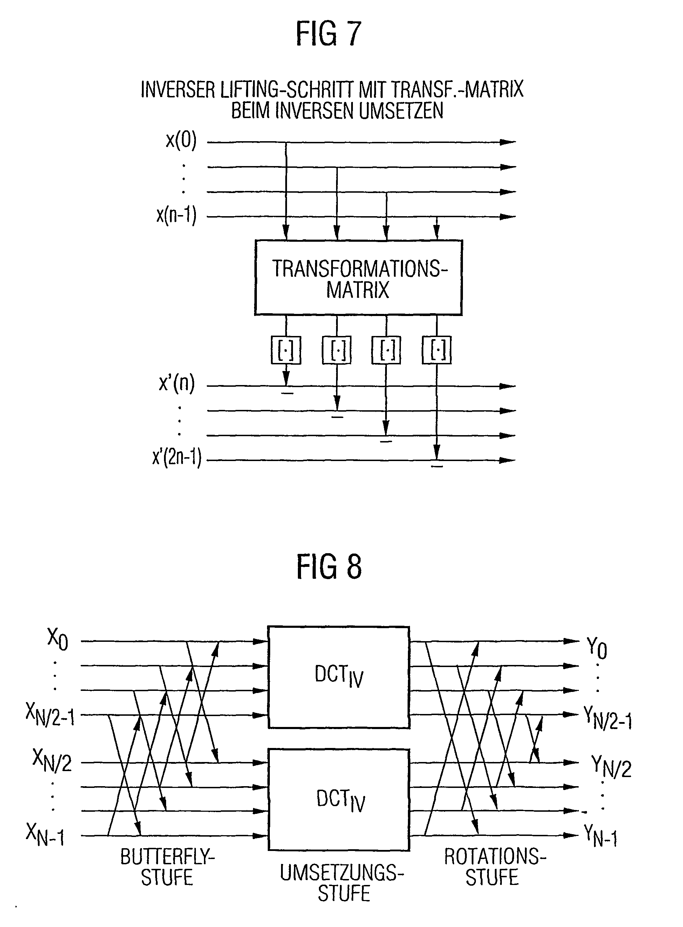

Somit kann dieser Prozeß ohne Fehler invertiert werden, indem einfach dieselbe Matrix A und dieselbe Rundungsfunktion verwendet wird, und indem die resultierenden Werte statt der Addierung bei der Hin-Verarbeitung nunmehr subtrahiert werden. Die Hin-Verarbeitung ist in Fig. 6 dargestellt, während die Rück-Verarbeitung in Fig. 7 dargestellt ist. Es sei darauf hingewiesen, daß die Transformationsmatrix in Fig. 6 zu der Transformationsmatrix in Fig. 7 identisch ist, was aus Einfachheitsgründen der Implementierung bevorzugt wird.

Nachdem die Werte $(x_0, ..., x_{n-1})$ im Vorwärtsschritt, der in Fig. 6 gezeigt ist, nicht modifiziert werden, sind sie für den inversen Schritt, also für den Rückwärtsschritt in Fig. 7, noch vorhanden. Es sei darauf hingewiesen, daß es keine speziellen Restriktionen für die Matrix A gibt. Dieselbe muß daher nicht notwendigerweise invertierbar sein.

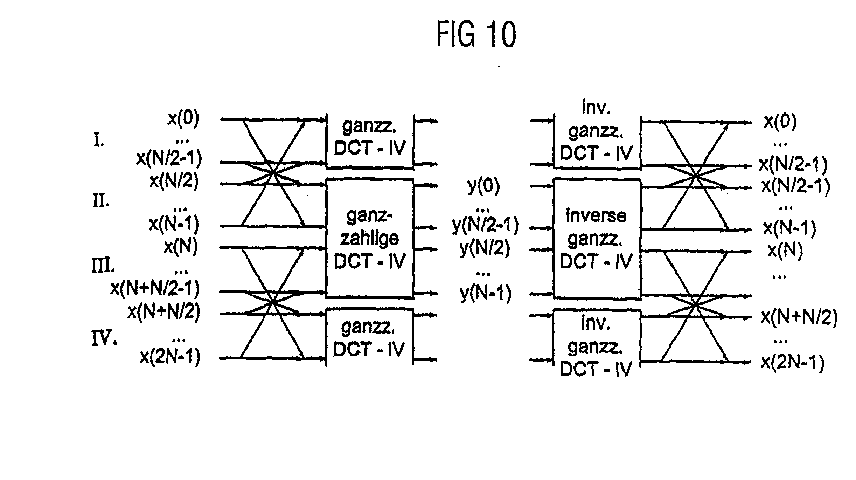

Um eine invertierbare ganzzahlige Approximation der bekannten MDCT zu erhalten, wird die MDCT in einer ersten Stufe in Givens-Rotationen zerlegt, wobei diese Stufe die Fensterungsstufe ist, und in eine nachfolgende DCT-IV-Stufe. Diese Zerlegung ist in der nachfolgend noch erläuterten Fig. 10 dargelegt und in der DE 10129240 A1 detailliert beschrieben.

Im Gegensatz zum Stand der Technik, bei dem die DCT-IV in mehrere Stufen von Givens-Rotationen zerlegt wird, wird erfindungsgemäß die Transformation selbst belassen und anschließend gerundet.

Bekannterweise wird somit die ganzzahlige Approximation der DCT-IV durch mehrere Stufen von Lifting-basierten Givens-Rotationen durchgeführt. Die Anzahl von Givens-Rotationen wird durch den zugrundeliegenden verwendeten schnellen Algorithmus bestimmt. So ist die Anzahl von Givens-Rotationen durch O (N log N) für eine Transformation der Länge N gegeben. Die Fensterungsstufe jeder MDCT-Zerlegung besteht nur aus N/2 Givens-Rotationen oder aus 3N/2 Rundungsschritten. So gibt besonders bei Transformationslängen, die hoch sind, wie sie in Audiocodieranwendungen verwendet werden (beispielsweise 1.024), die ganzzahlige Approximation der DCT-IV den Hauptbeitrag für den Approximationsfehler.

Der erfindungsgemäße Lösungsansatz verwendet das beschriebene multidimensionale Lifting-Schema. Damit wird die Anzahl der Rundungsschritte in der $DCT_{IV}$ auf 3N/2 reduziert, also gleich der Anzahl von Rundungsschritten in der Fensterungsstufe gemacht, und zwar im Vergleich zu ungefähr $2N \log_2 N$ Rundungsschritten bei dem konventionellen Lifting-basierten Lösungsansatz.

Erfindungsgemäß wird die DCT-IV auf zwei Blöcke von Signalen gleichzeitig angewendet. Eine Möglichkeit hierzu ist in Fig. 5 dargestellt, wo einfach beispielsweise zwei zeitlich aufeinanderfolgende Blöcke von Abtastwerten einer DCT-IV unterzogen werden. Die beiden Blöcke, die den beiden Transformationen unterzogen werden, können jedoch auch Abtastwerte von zwei Kanälen eines Mehrkanalsignals sein.

Die Zerlegung aus der vorstehend beschriebenen mehrdimensionalen Lifting-Gleichung wird auf die Transformationsvorschrift angewendet, die auch als N x N-Matrix betrachtet werden kann. Da die Inverse insbesondere bei der DCT-IV wieder die DCT-IV ist, ergibt sich folgende Zerlegung für das in Fig. 5 gezeigte Konzept:

$$\begin{pmatrix} DCT_{IV} & 0 \\ 0 & DCT_{IV} \end{pmatrix} = \begin{pmatrix} -E_N & 0 \\ DCT_{IV} & E_N \end{pmatrix} \begin{pmatrix} E_N & -DCT_{IV} \\ 0 & E_N \end{pmatrix} \begin{pmatrix} 0 & E_N \\ E_N & DCT_{IV} \end{pmatrix}$$

Die Permutationen der Multiplikationen mit -1 können in eigene Blockmatrizen extrahiert werden, so daß sich der folgende Zusammenhang ergibt:

$$\begin{pmatrix} DCT_{IV} & 0 \\ 0 & DCT_{IV} \end{pmatrix} = \begin{pmatrix} -E_N & 0 \\ 0 & E_N \end{pmatrix}\begin{pmatrix} E_N & 0 \\ DCT_{IV} & E_N \end{pmatrix}\begin{pmatrix} E_N & -DCT_{IV} \\ 0 & E_N \end{pmatrix}\begin{pmatrix} E_N & 0 \\ DCT_{IV} & E_N \end{pmatrix}\begin{pmatrix} 0 & E_N \\ E_N & 0 \end{pmatrix}$$

Somit kann die Anwendung einer Transformation auf zwei Blöcke von Signalen, also auf zwei Blöcke von diskreten Werten, mit vorzugsweise drei multidimensionalen Lifting-Schritten erhalten werden:

$$\begin{pmatrix} E_N & 0 \\ DCT_{IV} & E_N \end{pmatrix}\begin{pmatrix} E_N & -DCT_{IV} \\ 0 & E_N \end{pmatrix}\begin{pmatrix} E_N & 0 \\ DCT_{IV} & E_N \end{pmatrix}$$

Die vorstehende Gleichung ist in Fig. 3 anhand eines bevorzugten Ausführungsbeispiels der vorliegenden Erfindung graphisch dargestellt. Das inverse Umsetzen ist, wie es ausgeführt worden ist, in Fig. 4 entsprechend illustriert.
Mit dem erfindungsgemäßen Lösungsansatz können zwei DCT-IV-Transformationen der Länge N auf invertierbare Art und Weise implementiert werden, wobei nur 3N Rundungsschritte benötigt werden, also 3N/2 Rundungsschritte pro Transformation.
Die DCT-IV in den drei mehrdimensionalen Lifting-Schritten kann eine beliebige Implementierung haben, also beispielsweise eine Gleitkomma- oder eine Festkomma-basierte Implementierung. Sie muß nicht einmal invertierbar sein. Sie muß nur genau auf dieselbe Art und Weise im Vorwärts- und im Rückwärtsprozeß durchgeführt werden. Dies führt dazu, daß dieses Konzept für hohe Transformationslängen, wie beispielsweise 1.024, geeignet ist, wie sie bei aktuellen Audiocodieranwendungen verwendet werden.
Die gesamte Rechenkomplexität ist gleich dem 1,5-fachen der Rechenkomplexität der nicht-ganzzahligen Implementierung der beiden DCT-IV-Transformationen. Diese Rechenkomplexität ist immer noch deutlich niedriger als für herkömmliche Lifting-basierte ganzzahlige Implementierungen, die etwa doppelt so komplex wie die herkömmliche DCT-IV ist, da diese Implementierungen die trivialen Plus/Minus-Butterflies basierend auf dem verwendeten Lifting-Schema verwenden müssen, um eine Energieerhaltung zu erreichen, wie es in R. Geiger, T. Sporer, J. Koller und K. Brandenburg, "Audio Coding based on Integer Transforms" in 111th AES Convention, New York, 2001, beschrieben ist.
Der dargestellte Lösungsansatz wird wenigstens zwei DCT-IV-Transformationen gewissermaßen gleichzeitig, also innerhalb einer Umsetzung berechnen. Dies kann beispielsweise erreicht werden, indem die DCT-IV-Transformation für zwei aufeinanderfolgende Blöcke des Audiosignals oder zwei aufeinanderfolgende Bilder eines Bildsignals berechnet wird. Im Falle eines Zwei-Kanal-Stereosignals kann dies auch erreicht werden, indem die DCT-IV des linken und des rechten Kanals in einer Umsetzungsaktion bzw. inversen Umsetzungsaktion berechnet wird. Die erste Version führt eine zusätzliche Verzögerung von einem Block in das System ein. Die zweite Version ist für Stereokanäle bzw. allgemein gesagt für Mehrkanalsignale möglich.
Alternativ, wenn beide Optionen nicht erwünscht sind, wenn jedoch eine normale Blockverarbeitungslänge von N Werten beibehalten werden soll, kann auch die DCT-IV der Länge N zerlegt werden in zwei DCT-IV-Transformationen der Länge N/2. In diesem Zusammenhang wird auf Y. Zeng, G. Bi und Z.
Lin, "Integer sinusoidal transforms based on lifting factorization", in Proc. ICASSP'01, Mai 2001, S. 1.181 - 1.184, verwiesen, wo diese Zerlegung ausgeführt wird. Zusätzlich zu den beiden DCT-Transformationen der Länge N/2 werden noch einige zusätzliche Stufen von Givens-Rotationen benötigt. In diesem Algorithmus wird ferner eine Blockmatrix

$$\begin{pmatrix} E_{N/2} & -E_{N/2} \\ E_{N/2} & E_{N/2} \end{pmatrix},$$

d. h. N/2 Plus/Minus-Butterflies, eine Blockdiagonalmatrix mit N/2-Givens-Rotationen und ferner einige Permutationsmatrizen angewendet. Unter Verwendung dieser zusätzlichen Stufen von N/2-Givens-Rotationen kann der multidimensionale Lifting-Approach auch für die Berechnung nur einer DCT-IV der Länge N verwendet werden. Die Grundstruktur dieses Algorithmus ist in Fig. 8 dargestellt, wo neben der eigentlichen Umsetzungsstufe, in der zwei DCT-IV-Transformationen mit der Länge N/2 verwendet werden, zunächst eine Butterfly-Stufe vorhanden ist, um den ersten und den zweiten Block von diskreten Werten, welche nunmehr jedoch lediglich eine Länge von N/2 haben, zu berechnen. Ausgangsseitig ist ferner eine Rotationsstufe vorgesehen, um aus dem Block von Ausgangswerten der transformierten Darstellung und dem weiteren Block von Ausgangswerten der transformierten Darstellung, welche nunmehr jedoch lediglich jeweils N/2 Werte haben, die Ausgangswerte $y_0$, ..., $y_{N-1}$ zu erhalten, die gleich den Ausgangswerten einer DCT-IV-Operation von Fig. 5 sind, wie es bei einem Vergleich der Indizes eingangsseitig und ausgangsseitig von Fig. 8 und Fig. 5 ersichtlich wird.

Bisher wurde lediglich die Anwendung des mehrdimensionalen Liftings auf Blockmatrizen folgender Form dargelegt.

$$\begin{pmatrix} T & 0 \\ 0 & T^{-1} \end{pmatrix}$$

Dennoch ist es auch möglich, andere Blockmatrizen in mehrdimensionale Lifting-Schritte zu zerlegen. Beispielsweise kann die folgende Zerlegung verwendet werden, um die Kombination von einer Stufe mit normierten Plus/Minus-Butterflies und zwei Blöcken von DCT-IV-Transformationen durch drei Schritte des multidimensionalen Liftings zu implementieren:

$$\frac{1}{\sqrt{2}}\begin{pmatrix} E_N & E_N \\ -E_N & E_N \end{pmatrix}\begin{pmatrix} DCT_{IV} & 0 \\ 0 & DCT_{IV} \end{pmatrix} = \begin{pmatrix} \frac{1}{\sqrt{2}} DCT_{IV} & \frac{1}{\sqrt{2}} DCT_{IV} \\ -\frac{1}{\sqrt{2}} DCT_{IV} & \frac{1}{\sqrt{2}} DCT_{IV} \end{pmatrix} =$$

$$\begin{pmatrix} E_N & 0 \\ E_N & -\sqrt{2}DCT_{IV} & E_N \end{pmatrix}\begin{pmatrix} E_N & \frac{1}{\sqrt{2}} DCT_{IV} \\ 0 & E_N \end{pmatrix}\begin{pmatrix} E_N & 0 \\ E_N & -\sqrt{2}DCT_{IV} & E_N \end{pmatrix}$$

Aus der vorstehenden Gleichung wird ersichtlich, daß die erste Transformationsvorschrift, die in der linken Klammer der vorstehenden Gleichung verwendet wird, und die zweite Transformationsvorschrift, die in der mittleren Klammer der vorstehenden Gleichung verwendet wird, und die dritte Transformationsvorschrift, die in der letzten Klammer der vorstehenden Gleichung verwendet wird, nicht identisch sein müssen. Des weiteren wird aus der vorstehenden Gleichung ersichtlich, daß nicht nur Blockmatrizen zerlegt werden können, bei denen lediglich die Hauptdiagonalelemente besetzt sind, sondern daß auch voll besetzte Matrizen erfindungsgemäß verarbeitet werden können. Ferner sei darauf hingewiesen, daß die vorliegende Erfindung nicht darauf begrenzt ist, daß die Transformationsvorschriften, die beim Umsetzen in eine transformierte Darstellung verwendet werden, identisch sein müssen oder gar irgendeinen Bezug zueinander haben müssen, derart, daß beispielsweise die zweite Transformationsvorschrift die Rückwärts-Transformationsvorschrift zu der ersten Transformationsvorschrift ist. Grundsätzlich könnten auch drei voneinander unterschiedliche Transformationsvorschriften verwendet werden, solange dies bei der inversen Darstellung berücksichtigt wird.

In diesem Zusammenhang wird noch einmal auf Fig. 3 und Fig. 4 Bezug genommen. Bei der Umsetzung der diskreten Werte in eine transformierte Darstellung kann die Einrichtung 102 ausgebildet sein, um irgendeine Transformationsvorschrift 1 zu implementieren. Ferner kann die Einrichtung 108 ebenfalls ausgebildet sein, um irgendeine andere oder gleiche Transformationsvorschrift zu verwenden, die als Transformationsvorschrift 2 bezeichnet ist. Ferner kann die Einrichtung 140 ausgebildet sein, um allgemein irgendeine Transformationsvorschrift 3 zu verwenden, die nicht notwendigerweise gleich der ersten oder der zweiten Transformationsvorschrift sein muß.

Bei der inversen Umsetzung der transformierten Darstellung muß jedoch eine Anpassung an die in Fig. 3 dargelegten Transformationsvorschriften 1 - 3 gefunden werden, dahingehend, daß die erste Einrichtung 124 zum Umsetzen nicht irgendeine Transformationsvorschrift ausführt, sondern die Transformationsvorschrift 3, die im Block 140 von Fig. 3 ausgeführt worden ist. Entsprechend muß die Einrichtung 130 in Fig. 4 die Transformationsvorschrift 2 ausführen, die auch durch den Block 108 in Fig. 3 ausgeführt worden ist. Schließlich muß die Einrichtung 150 von Fig. 4 die Transformationsvorschrift 1 ausführen, die auch durch die Einrichtung 102 von Fig. 3 ausgeführt worden ist, damit eine verlustlose inverse Umsetzung erhalten wird.

Nachfolgend wird Bezug nehmend auf die Fig. 9 - 11 die Zerlegung der MDCT-Fensterung noch einmal dargestellt, wie sie in der DE 10129240 A1 beschrieben ist, wobei diese Zerlegung der MDCT-Fensterung in Givens-Rotationen mit Lifting-Matrizen und entsprechenden Rundungen vorteilhafterweise mit dem in Fig. 1 für die Umsetzung und Fig. 2 für die inverse Umsetzung dargelegten Konzept kombinierbar ist, um eine komplette ganzzahlige MDCT-Approximation, also eine Integer-MDCT (IntMDCT) gemäß der vorliegenden Erfindung zu erhalten, wobei sowohl ein Hin- als auch ein Rück-Transformationskonzept am Beispiel einer MDCT ausgeführt ist.

Fig. 9 zeigt ein Übersichtsdiagramm für die erfindungsgemäß bevorzugte Vorrichtung zum Verarbeiten von zeitdiskreten Abtastwerten, die ein Audiosignal darstellen, um ganzzahlige Werte zu erhalten, auf denen aufbauend der Int-MDCT-Ganzzahl-Transformationsalgorithmus arbeitet. Die zeitdiskreten Abtastwerte werden durch die in Fig. 9 gezeigte Vorrichtung gefenstert und optional in eine spektrale Darstellung umgesetzt. Die zeitdiskreten Abtastwerte, die an einem Eingang 10 in die Vorrichtung eingespeist werden, werden mit einem Fenster w mit einer Länge, die 2N zeitdiskreten Abtastwerten entspricht, gefenstert, um an einem Ausgang 12 ganzzahlige gefensterte Abtastwerte zu erreichen, welche dazu geeignet sind, um mittels einer Transformation und insbesondere der Einrichtung 14 zum Ausführen einer ganzzahligen DCT in eine spektrale Darstellung umgesetzt zu werden. Die ganzzahlige DCT ist ausgebildet, um aus N Eingangswerten N Ausgangswerte zu erzeugen, was im Gegensatz zu der MDCT-Funktion 408 von Fig. 12a steht, die aus 2N gefensterten Abtastwerten aufgrund der MDCT-Gleichung lediglich N Spektralwerte erzeugt.

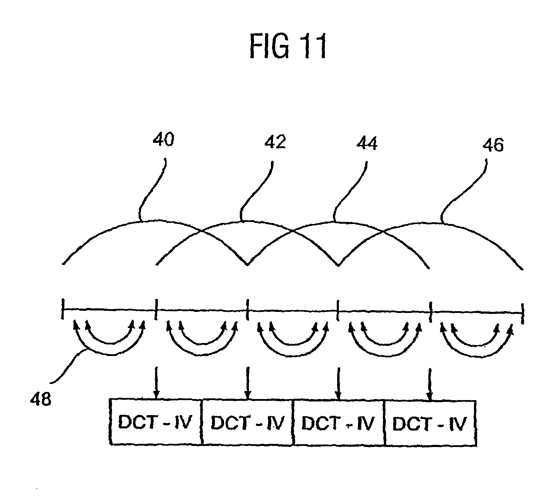

Zum Fenstern der zeitdiskreten Abtastwerte werden zunächst in einer Einrichtung 16 zwei zeitdiskrete Abtastwerte ausgewählt, die zusammen einen Vektor von zeitdiskreten Abtastwerten darstellen. Ein zeitdiskreter Abtastwert, der durch die Einrichtung 16 ausgewählt wird, liegt im ersten Viertel des Fensters. Der andere zeitdiskrete Abtastwert liegt in dem zweiten Viertel des Fensters, wie es anhand von Fig. 11 noch detaillierter ausgeführt wird. Der durch die Einrichtung 16 erzeugte Vektor wird nunmehr mit einer Drehmatrix der Dimension 2 x 2 beaufschlagt, wobei diese Operation nicht unmittelbar durchgeführt wird, sondern mittels mehrerer sogenannten Lifting-Matrizen.

Eine Lifting-Matrix hat die Eigenschaft, daß sie nur ein Element aufweist, das von dem Fenster w abhängt und ungleich "1" oder "0" ist.

Die Faktorisierung von Wavelet-Transformationen in Lifting-Schritte ist in der Fachveröffentlichung "Factoring Wavelet Transforms Into Lifting Steps", Ingrid Daubechies und Wim Sweldens, Preprint, Bell Laboratories, Lucent Technologies, 1996, dargestellt. Allgemein ist ein Lifting-Schema eine einfache Beziehung zwischen perfekt rekonstruierenden Filterpaaren, die dasselbe Tiefpaß- oder Hochpaßfilter haben. Jedes Paar komplementärer Filter kann in Lifting-Schritte faktorisiert werden. Insbesondere gilt dies für Givens-Rotationen. Es sei der Fall betrachtet, bei dem die Polyphasenmatrix eine Givens-Rotation ist. Es gilt dann:

$$\begin{pmatrix} \cos\alpha & -\sin\alpha \\ \sin\alpha & \cos\alpha \end{pmatrix} = \begin{pmatrix} 1 & \frac{\cos\alpha-1}{\sin\alpha} \\ 0 & 1 \end{pmatrix} \begin{pmatrix} 1 & 0 \\ \sin\alpha & 1 \end{pmatrix} \begin{pmatrix} 1 & \frac{\cos\alpha-1}{\sin\alpha} \\ 0 & 1 \end{pmatrix} \qquad (1)$$

Jede der drei rechts des Gleichheitszeichens stehenden Lifting-Matrizen hat als Hauptdiagonalelemente den Wert "1". Ferner ist in jeder Lifting-Matrix ein Nebendiagonalelement gleich 0, und ein Nebendiagonalelement vom Drehwinkel $\alpha$ abhängig.

Der Vektor wird nunmehr mit der dritten Lifting-Matrix, d. h. der Liftingmatrix ganz rechts in obiger Gleichung, multipliziert, um einen ersten Ergebnisvektor zu erhalten. Dies ist in Fig. 9 durch eine Einrichtung 18 dargestellt. Es wird nunmehr der erste Ergebnisvektor mit einer beliebigen Rundungsfunktion, die die Menge der reellen Zahlen in die Menge der ganzen Zahlen abbildet, gerundet, wie es in Fig. 9 durch eine Einrichtung 20 dargestellt ist. Am Ausgang der Einrichtung 20 wird ein gerundeter erster Ergebnisvektor erhalten. Der gerundete erste Ergebnisvektor wird nunmehr in eine Einrichtung 22 zum Multiplizieren desselben mit der mittleren, d. h. zweiten, Lifting-Matrix eingespeist, um einen zweiten Ergebnisvektor zu erhalten, der in einer Einrichtung 24 wiederum gerundet wird, um einen gerundeten zweiten Ergebnisvektor zu erhalten. Der gerundete zweite Ergebnisvektor wird nunmehr in eine Einrichtung 26 eingespeist, und zwar zum Multiplizieren desselben mit der links in der obigen Gleichung aufgeführten, d. h. ersten, Liftingmatrix, um einen dritten Ergebnisvektor zu erhalten, der schließlich noch mittels einer Einrichtung 28 gerundet wird, um schließlich an dem Ausgang 12 ganzzahlige gefensterte Abtastwerte zu erhalten, die nun, wenn eine spektrale Darstellung derselben gewünscht wird, durch die Einrichtung 14 verarbeitet werden müssen, um an einem Spektralausgang 30 ganzzahlige Spektralwerte zu erhalten.

Vorzugsweise ist die Einrichtung 14 als Ganzzahl-DCT oder Integer-DCT ausgeführt.

Die diskrete Cosinus-Transformation gemäß Typ 4 (DCT-IV) mit einer Länge N ist durch folgende Gleichung gegeben:

$$X_t(m) = \sqrt{\frac{2}{N}} \sum_{k=0}^{N-1} x(k) \cos\left(\frac{\pi}{4N}(2k+1)(2m+1)\right) \qquad (2)$$

Die Koeffizienten der DCT-IV bilden eine orthonormale N x N Matrix. Jede orthogonale N x N-Matrix kann in N (N-1)/2 Givens-Rotationen zerlegt werden, wie es in der Fachveröffentlichung P. P. Vaidyanathan, "Multirate Systems And Filter Banks", Prentice Hall, Englewood Cliffs, 1993, ausgeführt ist. Es sei darauf hingewiesen, daß auch weitere Zerlegungen existieren.

Bezüglich der Klassifikationen der verschiedenen DCT-Algorithmen sei auf H. S. Malvar, "Signal Processing With Lapped Transforms", Artech House, 1992, verwiesen. Allgemein unterscheiden sich die DCT-Algorithmen durch die Art ihrer Basisfunktionen. Während die DCT-IV, die hier bevorzugt wird, nicht-symmetrische Basisfunktionen umfaßt, d. h. eine Cosinus-Viertelwelle, eine Cosinus-3/4-Welle, eine Cosinus-5/4-Welle, eine Cosinus-7/4-Welle, etc., hat die diskrete Cosinustransformation z. B. vom Typ II (DCT-II), achsensymmetrische und punktsymmetrische Basisfunktionen. Die 0-te Basisfunktion hat einen Gleichanteil, die erste Basisfunktion ist eine halbe Cosinuswelle, die zweite Basisfunktion ist eine ganze Cosinuswelle, usw. Aufgrund der Tatsache, daß die DCT-II den Gleichanteil besonders berücksichtigt, wird sie bei der Videocodierung verwendet, nicht aber bei der Audiocodierung, da bei der Audiocodierung im Gegensatz zur Videocodierung der Gleichanteil nicht von Relevanz ist.

Im nachfolgend wird darauf eingegangen, wie der Drehwinkel $\alpha$ der Givens-Rotation von der Fensterfunktion abhängt.

Eine MDCT mit einer Fensterlänge von 2N kann in eine diskrete Cosinustransformation vom Typ IV mit einer Länge N reduziert werden. Dies wird dadurch erreicht, daß die TDAC-Operation explizit im Zeitbereich durchgeführt wird, und daß dann die DCT-IV angewandt wird. Bei einer 50%igen Überlappung überlappt die linke Hälfte des Fensters für einen Block t mit der rechten Hälfte des vorausgehenden Blocks, d. h. des Blocks t-1. Der überlappende Teil zwei aufeinanderfolgender Blöcke t-1 und t wird im Zeitbereich, d. h. vor der Transformation, folgendermaßen vorverarbeitet, d. h. zwischen dem Eingang 10 und dem Ausgang 12 von Fig. 9 verarbeitet:

$$\begin{pmatrix} \widetilde{x}_t(k) \\ \widetilde{x}_{t-1}(N-1-k) \end{pmatrix} = \begin{pmatrix} w\left(\frac{N}{2}+k\right) & -w\left(\frac{N}{2}-1-k\right) \\ w\left(\frac{N}{2}-1-k\right) & w\left(\frac{N}{2}+k\right) \end{pmatrix} \begin{pmatrix} x_t\left(\frac{N}{2}+k\right) \\ x_t\left(\frac{N}{2}-1-k\right) \end{pmatrix} \qquad (3)$$

Die mit der Tilde bezeichneten Werte sind die Werte am Ausgang 12 von Fig. 9, während die ohne Tilde in der obigen Gleichung bezeichnete x Werte die Werte am Eingang 10 bzw. hinter der Einrichtung 16 zum Auswählen sind. Der Laufindex k läuft von 0 bis N/2-1, während w die Fensterfunktion darstellt.

Aus der TDAC-Bedingung für die Fensterfunktion w gilt folgender Zusammenhang:

$$w\left(\frac{N}{2}+k\right)^2 + w\left(\frac{N}{2}-1-k\right)^2 = 1 \qquad (4)$$

Für bestimmte Winkel $\alpha_k$, k = 0, ..., N/2-1 kann diese Vorverarbeitung im Zeitbereich als Givens-Rotation geschrieben werden, wie es ausgeführt worden ist.

Der Winkel $\alpha$ der Givens-Rotation hängt folgendermaßen von der Fensterfunktion w ab:

$$\alpha = \mathrm{arctan}[w(N/2-1-k) \ / \ w(N/2 + k)] \qquad (5)$$

Es sei darauf hingewiesen, daß beliebige Fensterfunktionen w eingesetzt werden können, solange sie diese TDAC-Bedingung erfüllen.

Im nachfolgenden wird anhand von Fig. 10 ein kaskadierter Codierer und Decodierer beschrieben. Die zeitdiskreten Abtastwerte x(0) bis x(2N-1), die durch ein Fenster gemeinsam "gefenstert" werden, werden zunächst derart durch die Einrichtung 16 von Fig. 9 ausgewählt, daß der Abtastwert x(0) und der Abtastwert x(N-1), d. h. ein Abtastwert aus dem ersten Viertel des Fensters und ein Abtastwert aus dem zweiten Viertel des Fensters, ausgewählt werden, um den Vektor am Ausgang der Einrichtung 16 zu bilden. Die sich überkreuzenden Pfeile stellen schematisch die Lifting-Multiplikationen und anschließenden Rundungen der Einrichtungen 18, 20 bzw. 22, 24 bzw. 26, 28 dar, um am Eingang der DCT-IV-Blöcke die ganzzahligen gefensterten Abtastwerte zu erhalten.

Wenn der erste Vektor wie oben beschrieben verarbeitet ist, wird ferner ein zweiter Vektor aus den Abtastwerten x(N/2-1) und x(N/2), d. h. wieder ein Abtastwert aus dem ersten Viertel des Fenster und ein Abtastwert aus dem zweiten Viertel des Fensters, ausgewählt und wiederum durch den in Fig. 9 beschriebenen Algorithmus verarbeitet. Analog dazu werden sämtliche anderen Abtastwertpaare aus dem ersten und zweiten Viertel des Fensters bearbeitet. Die selbe Verarbeitung wird für das dritte und vierte Viertel des ersten Fensters durchgeführt. Nunmehr liegen am Ausgang 12 2N gefensterte ganzzahlige Abtastwerte vor, die nunmehr so, wie es in Fig. 10 dargestellt ist, in eine DCT-IV-Transformation eingespeist werden. Insbesondere werden die ganzzahligen gefensterten Abtastwerte des zweiten und dritten Viertels in eine DCT eingespeist. Die gefensterten ganzzahligen Abtastwerte des ersten Viertels des Fensters werden in eine vorausgehende DCT-IV zusammen mit den gefensterten ganzzahligen Abtastwerten des vierten Viertels des vorausgehenden Fensters verarbeitet. Analog dazu wird das vierte Viertel der gefensterten ganzzahligen Abtastwerte in Fig. 10 mit dem ersten Viertel des nächsten Fensters zusammen in eine DCT-IV-Transformation eingespeist. Die mittlere in Fig. 10 gezeigte ganzzahlige DCT-IV-Transformation 32 liefert nunmehr N ganzzahlige Spektralwerte y(0) bis y(N-1). Diese ganzzahligen Spektralwerte können nunmehr beispielsweise einfach Entropie-codiert werden, ohne daß eine dazwischenliegende Quantisierung erforderlich ist, da die Fensterung und Transformation ganzzahlige Ausgangswerte liefert.

In der rechten Hälfte von Fig. 10 ist ein Decodierer dargestellt. Der Decodierer bestehend aus Rücktransformation und "inverser Fensterung" arbeitet invers zum Codierer. Es ist bekannt, daß zur Rücktransformation einer DCT-IV eine inverse DCT-IV verwendet werden kann, wie es in Fig. 10 dargestellt ist. Die Ausgangswerte der Decodierer-DCT-IV 34 werden nunmehr, wie es in Fig. 10 dargestellt ist, mit den entsprechenden Werten der vorausgehenden Transformation bzw. der nachfolgenden Transformation invers verarbeitet, um aus den ganzzahligen gefensterten Abtastwerten am Ausgang der Einrichtung 34 bzw. der vorausgehenden und nachfolgenden Transformation wieder zeitdiskrete Audio-Abtastwerte x(0) bis x(2N-1) zu erzeugen.

Die ausgangsseitige Operation geschieht durch eine inverse Givens-Rotation, d. h. derart, daß die Blöcke 26, 28 bzw. 22, 24 bzw. 18, 20 in der entgegengesetzten Richtung durchlaufen werden. Dies sei anhand der zweiten Lifting-Matrix von Gleichung 1 näher dargestellt. Wenn (im Codierer) der zweite Ergebnisvektor durch Multiplikation des gerundeten ersten Ergebnisvektors mit der zweiten Liftingmatrix (Einrichtung 22) gebildet wird, so ergibt sich folgender Ausdruck:

$$(x, y) \mapsto (x, y + x\sin\alpha) \qquad (6)$$

Die Werte x, y auf der rechten Seite von Gleichung 6 sind Ganzzahlen. Dies trifft jedoch für den Wert x sin $\alpha$ nicht zu. Hier muß die Rundungsfunktion r eingeführt werden, wie es in der nachfolgenden Gleichung

$$(x, y) \mapsto (x, y + r(x\sin\alpha)) \qquad (7)$$

dargestellt ist. Diese Operation führt die Einrichtung 24 aus.

Die inverse Abbildung (im Decodierer) ist folgendermaßen definiert:

$$(x', y') \mapsto (x', y' - r(x'\sin\alpha)) \qquad (8)$$

Aufgrund dem Minuszeichen vor der Rundungsoperation wird ersichtlich, daß die ganzzahlige Approximierung des Lifting-Schritts umgekehrt werden kann, ohne daß ein Fehler eingeführt wird. Die Anwendung dieser Approximation auf jeden der drei Lifting-Schritte führt zu einer ganzzahligen Approximation der Givens-Rotation. Die gerundete Rotation (im Codierer) kann umgekehrt werden (im Decodierer), ohne daß ein Fehler eingeführt wird, und zwar indem die inversen gerundeten Lifting-Schritte in umgekehrter Reihenfolge durchlaufen werden, d. h. wenn beim Decodieren der Algorithmus von Fig. 9 von unten nach oben durchgeführt wird.

Wenn die Rundungsfunktion r punktsymmetrisch ist, ist die inverse gerundete Rotation identisch zu der gerundeten Rotation mit dem Winkel -$\alpha$ und lautet folgendermaßen:

$$\begin{pmatrix} \cos\alpha & \sin\alpha \\ -\sin\alpha & \cos\alpha \end{pmatrix} \qquad (9)$$

Die Lifting-Matrizen für den Decodierer, d. h. für die inverse Givens-Rotation, ergibt sich in diesem Fall unmittelbar aus Gleichung (1), indem lediglich der Ausdruck "sin $\alpha$" durch den Ausdruck "-sin $\alpha$" ersetzt wird.

Im nachfolgenden wird anhand von Fig. 11 noch einmal die Zerlegung einer üblichen MDCT mit überlappenden Fenstern 40 bis 46 dargelegt. Die Fenster 40 bis 46 überlappen jeweils zu 50%. Pro Fenster werden zunächst Givens-Rotationen innerhalb des ersten und zweiten Viertels eines Fensters bzw. innerhalb des dritten und vierten Viertels eines Fensters ausgeführt, wie es durch die Pfeile 48 schematisch dargestellt ist. Dann werden die rotierten Werte, d. h. die gefensterten ganzzahligen Abtastwerte derart in eine N-zu-N-DCT eingespeist, daß immer das zweite und dritte Viertel eines Fensters bzw. das vierte und erste Viertel eines darauffolgenden Fensters gemeinsam mittels eines DCT-IV-Algorithmus in eine spektrale Darstellung umgesetzt wird.

Es werden daher die üblichen Givens-Rotation in Lifting-Matrizen zerlegt, die sequentiell ausgeführt werden, wobei nach jeder Lifting-Matrix-Multiplikation ein Rundungsschritt eingeführt wird, derart, daß die Gleitkomma-Zahlen unmittelbar nach ihrer Entstehung gerundet werden, derart, daß vor jeder Multiplikation eines Ergebnisvektors mit einer Lifting-Matrix der Ergebnisvektor lediglich Ganzzahlen hat.

Die Ausgangswerte bleiben also immer ganzzahlig, wobei es bevorzugt wird, auch ganzzahlige Eingangswerte zu verwenden. Dies stellt keine Einschränkung dar, da jegliche beispielsweise PCM-Abtastwerte, wie sie auf einer CD abgespeichert sind, ganzzahlige Zahlenwerte sind, deren Wertebereich je nach Bitbreite variiert, d. h. abhängig davon, ob die zeitdiskreten digitalen Eingangswerte 16-Bit-Werte oder 24-Bit-Werte sind. Dennoch ist, wie es ausgeführt worden ist, der gesamte Prozeß invertierbar, indem die inversen Rotationen in umgekehrter Reihenfolge ausgeführt werden. Es existiert somit eine ganzzahlige Approximation der MDCT mit perfekter Rekonstruktion, also eine verlustlose Transformation.

Die gezeigte Transformation liefert ganzzahlige Ausgangswerte statt Gleitkommawerte. Sie liefert eine perfekte Rekonstruktion, so daß kein Fehler eingeführt wird, wenn eine Vorwärts- und dann eine Rückwärtstransformation ausgeführt werden. Die Transformation ist gemäß einem bevorzugten Ausführungsbeispiel der vorliegenden Erfindung ein Ersatz für die modifizierte diskrete Cosinustransformation. Auch andere Transformationsverfahren können jedoch ganzzahlig ausgeführt werden, so lange eine Zerlegung in Rotationen und eine Zerlegung der Rotationen in Lifting-Schritte möglich ist.

Die ganzzahlige MDCT hat die meisten günstigen Eigenschaften der MDCT. Sie hat eine überlappende Struktur, wodurch eine bessere Frequenzselektivität als bei nicht-überlappenden Blocktransformationen erhalten wird. Aufgrund der TDAC-Funktion, die bereits beim Fenstern vor der Transformation berücksichtigt wird, wird eine kritische Abtastung beibehalten, so daß die Gesamtanzahl von Spektralwerten, die ein Audiosignal darstellen, gleich der Gesamtanzahl von Eingangs-Abtastwerten ist.

Verglichen mit einer normalen MDCT, die Gleitkomma-Abtastwerte liefert, zeigt sich bei der beschriebenen bevorzugten ganzzahligen Transformation, daß lediglich in dem Spektralbereich, in dem wenig Signalpegel ist, das Rauschen im Vergleich zur normalen MDCT erhöht ist, während sich diese Rauscherhöhung bei signifikanten Signalpegeln nicht bemerkbar macht. Dafür bietet sich die ganzzahlige Verarbeitung für eine effiziente Hardware-Implementation an, da lediglich Multiplikationsschritte verwendet werden, die ohne weiteres in Verschieben-Addieren-Schritte (Shift/Add-Schritte) zerlegt werden können, welche einfach und schnell hardwaremäßig implementiert werden können. Selbstverständlich ist auch eine Software-Implementation möglich.

Die ganzzahlige Transformation liefert eine gute spektrale Darstellung des Audiosignals und bleibt dennoch im Bereich der ganzen Zahlen. Wenn sie auf tonale Teile eines Audiosignals angewandt wird, resultiert dies in einer guten Energiekonzentrierung. Damit kann ein effizientes verlustloses Codierschema aufgebaut werden, indem einfach die in Fig. 9 dargestellte Fensterung/Transformation mit einem Entropiecodierer kaskadiert wird. Insbesondere ein gestapeltes Codieren (Stacked Coding) unter Verwendung von Escape-Werten, wie es in MPEG AAC eingesetzt wird, ist günstig. Es wird bevorzugt, alle Werte um eine bestimmte Potenz von zwei herunterzuskalieren, bis sie in eine erwünschte Codetabelle passen, und dann die weggelassenen niederstwertigen Bits zusätzlich zu codieren. Im Vergleich zu der Alternative der Verwendung von größeren Codetabellen ist die beschriebene Alternative hinsichtlich des Speicherverbrauchs zum Speichern der Codetabellen günstiger. Ein nahezu verlustloser Codierer könnte auch dadurch erhalten werden, daß einfach bestimmte der niederstwertigen Bits weggelassen werden.

Insbesondere für tonale Signale ermöglicht eine Entropie-Codierung der ganzzahligen Spektralwerte einen hohen Codiergewinn. Für transiente Teile des Signals ist der Codiergewinn niedrig, und zwar aufgrund des flachen Spektrums transienter Signale, d. h. aufgrund einer geringen Anzahl von Spektralwerten, die gleich oder nahezu 0 sind. Wie es in J. Herre, J. D. Johnston: "Enhancing the Performance of Perceptual Audio Coders by Using Temporal Noise Shaping (TNS)" 101. AES Convention, Los Angeles, 1996, Preprint 4384, beschrieben ist, kann diese Flachheit jedoch verwendet werden, indem eine lineare Prädiktion im Frequenzbereich verwendet wird. Eine Alternative ist eine Prädiktion mit offener Schleife. Eine andere Alternative ist der Prädiktor mit geschlossener Schleife. Die erste Alternative, d. h. der Prädiktor mit offener Schleife, wird TNS genannt. Die Quantisierung nach der Prädiktion führt zu einer Adaption des resultierenden Quantisierungsrauschens an die zeitliche Struktur des Audiosignals und verhindert daher Vorechos in psychoakustischen Audiocodierern. Für ein verlustloses Audiocodieren ist die zweite Alternative, d. h. mit einem Prädiktor mit geschlossener Schleife, geeigneter, da die Prädiktion mit geschlossener Schleife eine genaue Rekonstruktion des Eingangssignals erlaubt. Wenn diese Technik auf ein erzeugtes Spektrum angewendet wird, muß ein Rundungsschritt nach jedem Schritt des Prädiktionsfilters durchgeführt werden, um im Bereich der Ganzzahlen zu bleiben. Durch Verwenden des inversen Filters und derselben Rundungsfunktion kann das ursprüngliche Spektrum genau wieder hergestellt werden.

Um die Redundanz zwischen zwei Kanälen zur Datenreduktion auszunutzen, kann auch eine Mitte-Seite-Codierung verlustlos eingesetzt werden, wenn eine gerundete Rotation mit einem Winkel $\pi/4$ verwendet wird. Im Vergleich zur Alternative des Berechnens der Summe und Differenz des linken und rechten Kanals eines Stereosignals hat die gerundete Rotation den Vorteil der Energieerhaltung. Die Verwendung sogenannter Joint-Stereo-Codiertechniken kann für jedes Band ein- oder ausgeschaltet werden, wie es auch im Standard MPEG AAC durchgeführt wird. Weitere Drehwinkel können ebenfalls berücksichtigt werden, um eine Redundanz zwischen zwei Kanälen flexibler reduzieren zu können.

Abhängig von den Gegebenheiten kann das erfindungsgemäße Verfahren zum Umsetzen bzw. zum inversen Umsetzen bzw. zum Zeit-Frequenz-Transformieren oder Frequenz-Zeit-Transformieren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das Verfahren ausgeführt wird. Allgemein besteht die Erfindung somit auch in einem Computerprogrammprodukt mit einem auf einem maschinenlesbaren Träger gespeicherten Programmcode zum Durchführen eines erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Rechner abläuft.

**Patentansprüche**

1. Vorrichtung zum Umsetzen von diskreten Werten in eine transformierte Darstellung mit ganzzahligen Werten, wobei die diskreten Werte Audio- und/oder Bildinformationen aufweisen, mit folgenden Merkmalen:

   einer Einrichtung (102) zum Verarbeiten eines ersten Blocks von diskreten Werten unter Verwendung einer ersten Transformationsvorschrift, um einen ersten Block von transformierten Werten zu erhalten;
   einer Einrichtung (104) zum Runden des ersten Blocks von transformierten Werten, um einen ersten Block von gerundeten transformierten Werten zu erhalten;
   einer Einrichtung (106) zum Summieren des ersten Blocks von gerundeten transformierten Werten zu einem zweiten Block von diskreten Werten, um einen zweiten Block von summierten Werten zu erhalten;
   einer Einrichtung (108) zum Verarbeiten des zweiten Blocks von summierten Werten unter Verwendung einer zweiten Transformationsvorschrift, um einen zweiten Block von transformierten Werten zu erhalten;
   einer Einrichtung (110) zum Runden des zweiten Blocks von transformierten Werten, um einen zweiten Block von gerundeten transformierten Werten zu erhalten; und
   einer Einrichtung (112) zum Subtrahieren des zweiten Blocks von gerundeten transformierten Werten von dem ersten Block von diskreten Werten, um einen Block von ganzzahligen Ausgangswerten der transformierten Darstellung zu erhalten.

2. Vorrichtung nach Anspruch 1, die ferner folgende Merkmale aufweist:

   eine Einrichtung (140) zum Verarbeiten des Blocks von ganzzahligen Ausgangswerten unter Verwendung einer dritten Transformationsvorschrift, um einen Block von transformierten Ausgangswerten zu erhalten;
   eine Einrichtung (142) zum Runden des Blocks von transformierten Ausgangswerten, um einen Block von gerundeten transformierten Ausgangswerten zu erhalten; und
   eine Einrichtung (144) zum Summieren des Blocks von gerundeten transformierten Ausgangswerten und des zweiten Blocks von summierten Werten, um einen weiteren Block von ganzzahligen Ausgangswerten der transformierten Darstellung zu erhalten.

**3.** Vorrichtung nach Anspruch 1 oder 2, bei der die erste Transformationsvorschrift, die zweite Transformationsvorschrift bzw. die dritte Transformationsvorschrift eine Transformationsmatrix umfassen.

**4.** Vorrichtung nach einem der vorhergehenden Ansprüche, bei der die erste Transformationsvorschrift, die zweite Transformationsvorschrift bzw. die dritte Transformationsvorschrift zueinander identisch sind.

**5.** Vorrichtung nach einem der vorhergehenden Ansprüche, bei der die erste Transformationsvorschrift und die dritte Transformationsvorschrift eine Hin-Transformationsvorschrift sind, während die zweite Transformationsvorschrift eine Rück-Transformationsvorschrift ist.

**6.** Vorrichtung nach einem der vorhergehenden Ansprüche, bei der die Einrichtung (104) zum Runden des ersten Blocks und die Einrichtung (110) zum Runden des zweiten Blocks bzw. die Einrichtung (142) zum Runden des Blocks von transformierten Ausgangswerten ausgebildet sind, um gemäß einer Rundungsfunktion zu runden, die gerundete Ergebnisse liefert, deren Genauigkeit geringer ist als eine Maschinengenauigkeit eines Rechners, der die Vorrichtung aufweist.

**7.** Vorrichtung nach einem der vorhergehenden Ansprüche, bei der der erste Block von diskreten Werten diskrete Werte von einer Ordnungszahl 0 bis zu einer Ordnungszahl N-1 hat, bei der der zweite Block von diskreten Werten diskrete Werte von einer Ordnungszahl N bis zu einer Ordnungszahl 2N-1 hat, bei der der erste Block von gerundeten transformierten Werten eine Ordnungszahl von 0 bis N-1 hat, und bei der die Einrichtung (106) zum Summieren ausgebildet ist, um eine werteweise Addition durchzuführen, so daß ein Wert des Blocks von gerundeten transformierten Werten mit einer Ordnungszahl i zu einem Wert des zweiten Blocks von diskreten Werten mit einer Ordnungszahl i+N summiert wird, wobei i ein Laufindex ist, der sich von 0 bis N-1 erstreckt.

**8.** Vorrichtung nach einem der vorhergehenden Ansprüche, bei der der erste Block von diskreten Werten diskrete Werte von einer Ordnungszahl 0 bis zu einer Ordnungszahl N-1 hat, bei der der zweite Block von diskreten Werten diskrete Werte von einer Ordnungszahl 0 bis zu einer Ordnungszahl 2N-1 hat, bei der der zweite Block von gerundeten transformierten Werten Werte zwischen einer Ordnungszahl N und 2N-1 hat, wobei die Einrichtung (112) zum Subtrahieren ausgebildet ist, um einen Wert des Blocks von gerundeten transformierten Werten mit der Ordnungszahl N+i von einem Wert des ersten Blocks mit der Ordnungszahl i zu subtrahieren, wobei i ein Laufindex ist, der sich von 0 bis N-1 erstreckt.

**9.** Vorrichtung nach einem der vorhergehenden Ansprüche, bei der der erste und der zweite Block von diskreten Werten ganzzahlige diskrete Werte umfassen.

**10.** Vorrichtung nach einem der vorhergehenden Ansprüche, bei der die Einrichtung (104) zum Runden des ersten Blocks von transformierten Werten oder die Einrichtung (110) zum Runden des zweiten Blocks von transformierten Werten ausgebildet sind, um gemäß derselben Rundungsvorschrift zu runden.

**11.** Vorrichtung nach Anspruch 3, bei der die Transformationsmatrix, die der ersten Transformationsvorschrift zugrunde liegt, die Transformationsmatrix, die der zweiten Transformationsvorschrift zugrunde liegt bzw. die Transformationsmatrix, die der dritten Transformationsvorschrift zugrunde liegt, jeweils eine quadratische Matrix ist, die eine Anzahl von Zeilen bzw. Spalten hat, die gleich einer Anzahl von diskreten Werten in dem ersten oder dem zweiten Block sind.

**12.** Vorrichtung nach einem der vorhergehenden Ansprüche, bei der die Einrichtung (102) zum Verarbeiten gemäß der ersten Transformationsvorschrift und die Einrichtung (108) zum Verarbeiten gemäß der zweiten Transformationsvorschrift in einem Transformierer ausgebildet sind, und bei der ferner eine Ablaufsteuerung vorgesehen ist, die ausgebildet ist, um dem Transformierer zunächst den ersten Block von diskreten Werten und später den zweiten Block von summierten Werten zuzuführen.

**13.** Vorrichtung nach einem der vorhergehenden Ansprüche, bei der die Einrichtung (104) zum Runden des ersten Blocks von transformierten Werten und die Einrichtung (110) zum Runden des zweiten Blocks von transformierten Werten in einem Runder ausgebildet sind, und

bei der ferner eine Ablaufsteuerung vorgesehen ist, um dem Runder zunächst den ersten Block von diskreten Werten und später den zweiten Block von transformierten Werten zuzuführen.

**14.** Vorrichtung nach einem der vorhergehenden Ansprüche,
bei der der erste und der zweite Block von diskreten Werten Audioabtastwerte eines ersten und eines zweiten Kanals eines Mehrkanalaudiosignals sind.

**15.** Vorrichtung nach einem der Ansprüche 1 bis 13,
bei der der erste Block und der zweite Block aufeinanderfolgende zeitliche Abtastwerte eines Audiosignals sind.

**16.** Hin-Transformationsvorrichtung mit folgenden Merkmalen:

einer Einrichtung (16, 18, 20, 22, 24, 26, 28) zum Fenstern eines ersten Blocks von Abtastwerten, die ein Audiosignal oder ein Bildsignal darstellen, und zum Fenstern eines zweiten Blocks von Abtastwerten, die ein Audiosignal oder Bildsignal darstellen, unter Verwendung mehrerer Lifting-Matrizen (18, 22, 26) und anschließender Rundungsoperationen (20, 24, 28), um einen ersten Block von diskreten Werten und einen zweiten Block von diskreten Werten zu erhalten; und
einer Vorrichtung nach einem der Ansprüche 1 bis 15, um eine transformierte Darstellung aus dem ersten und dem zweiten Block mit ganzzahligen Ausgangswerten zu erhalten.

**17.** Verfahren zum Umsetzen von diskreten Werten in eine transformierte Darstellung mit ganzzahligen Werten, wobei die diskreten Werte Audio- und/oder Bildinformationen aufweisen, mit folgenden Schritten:

Verarbeiten (102) eines ersten Blocks von diskreten Werten unter Verwendung einer ersten Transformationsvorschrift, um einen ersten Block von transformierten Werten zu erhalten;
Runden (104) des ersten Blocks von transformierten Werten, um einen ersten Block von gerundeten transformierten Werten zu erhalten;
Summieren (106) des ersten Blocks von gerundeten transformierten Werten zu einem zweiten Block von diskreten Werten, um einen zweiten Block von summierten Werten zu erhalten;
Verarbeiten (108) des zweiten Blocks von summierten Werten unter Verwendung einer zweiten Transformationsvorschrift, um einen zweiten Block von transformierten Werten zu erhalten;
Runden (110) des zweiten Blocks von transformierten Werten, um einen zweiten Block von gerundeten transformierten Werten zu erhalten; und
Subtrahieren (112) des zweiten Blocks von gerundeten transformierten Werten von dem ersten Block von diskreten Werten, um einen Block von ganzzahligen Ausgangswerten der transformierten Darstellung zu erhalten.

**18.** Hin-Transformationsverfahren mit folgenden Schritten:

Fenstern (16, 18, 20, 22, 24, 26, 28) eines ersten Blocks von Abtastwerten, die ein Audiosignal oder ein Bildsignal darstellen, und zum Fenstern eines zweiten Blocks von Abtastwerten, die ein Audiosignal oder Bildsignal darstellen, unter Verwendung mehrerer Lifting-Matrizen (18, 22, 26) und anschließender Rundungsoperationen (20, 24, 28), um einen ersten Block von diskreten Werten und einen zweiten Block von diskreten Werten zu erhalten; und
einem Verfahren nach Anspruch 17, um eine transformierte Darstellung aus dem ersten und dem zweiten Block mit ganzzahligen Ausgangswerten zu erhalten.

**19.** Vorrichtung zum inversen Umsetzen eines Blocks von ganzzahligen Ausgangswerten und eines zweiten Blocks von summierten Werten, die eine transformierte Darstellung von diskreten Werten sind, um einen ersten und einen zweiten Block der diskreten Werte zu erhalten, wobei der Block von ganzzahligen Ausgangswerten und der zweite Block von summierten Werten aus dem ersten und dem zweiten Block von diskreten Werten abgeleitet sind, durch Verarbeiten (102) eines ersten Blocks von diskreten Werten unter Verwendung einer ersten Transformationsvorschrift, um einen ersten Block von transformierten Werten zu erhalten, Runden (104) des ersten Blocks von transformierten Werten, um einen ersten Block von gerundeten transformierten Werten zu erhalten, Summieren (106) des ersten Blocks von gerundeten transformierten Werten zu einem zweiten Block von diskreten Werten, um den zweiten Block von summierten Werten zu erhalten, Verarbeiten (108) des zweiten Blocks von summierten Werten unter Verwendung einer zweiten Transformationsvorschrift, um einen zweiten Block von transformierten Werten zu erhalten, Runden (110) des zweiten Blocks von transformierten Werten, um einen zweiten Block von gerundeten transformierten Werten zu erhalten, und Subtrahieren (112) des zweiten Blocks von gerundeten transformierten Werten von dem ersten Block von diskreten Werten, um einen Block von ganzzahligen Ausgangswerten der transformierten Darstellung zu erhalten, mit folgenden Merkmalen:

einer Einrichtung (130) zum Verarbeiten des zweiten Blocks von summierten Werten unter Verwendung der zweiten Transformationsvorschrift, um einen ersten Block von transformierten Ausgangswerten zu erhalten; einer Einrichtung (132) zum Runden des ersten Blocks von transformierten Ausgangswerten, um einen ersten Block von gerundeten transformierten Werten zu erhalten;

einer Einrichtung (134) zum Summieren des ersten Blocks von gerundeten transformierten Ausgangswerten zu dem Block von ganzzahligen Ausgangswerten, um den ersten Block von diskreten Werten zu erhalten;

einer Einrichtung (150) zum Verarbeiten des ersten Blocks von diskreten Werten unter Verwendung der ersten Transformationsvorschrift, um einen zweiten Block von transformierten Werten zu erhalten;

einer Einrichtung (152) zum Runden des zweiten Blocks von transformierten Werten, um einen Block von gerundeten transformierten Werten zu erhalten; und

einer Einrichtung (154) zum Subtrahieren des Blocks von gerundeten transformierten Werten von dem zweiten Block von summierten Werten, um den zweiten Block von diskreten Werten zu erhalten.

**20.** Vorrichtung gemäß Anspruch 19, bei der ein weiterer Block von ganzzahligen Ausgangswerten der transformierten Darstellung aus dem zweiten Block von summierten Werten durch Verarbeiten (140) des Blocks von ganzzahligen Ausgangswerten unter Verwendung einer dritten Transformationsvorschrift, um einen Block von transformierten Ausgangswerten zu erhalten, durch Runden (142) des Blocks von transformierten Ausgangswerten, um einen Block von gerundeten transformierten Ausgangswerten zu erhalten, und durch Summieren (144) des Blocks von gerundeten transformierten Ausgangswerten und des zweiten Blocks von summierten Werten, um den weiteren Block von ganzzahligen Ausgangswerten der transformierten Darstellung zu erhalten, berechnet wird, und die ferner folgende Merkmale aufweist:

eine Einrichtung (124) zum Verarbeiten des Blocks von ganzzahligen Ausgangswerten unter Verwendung der dritten Transformationsvorschrift, um einen ersten Block von transformierten Ausgangswerten zu erhalten; einer Einrichtung (126) zum Runden des ersten Blocks von transformierten Ausgangswerten, um einen ersten Block von gerundeten transformierten Ausgangswerten zu erhalten; und

einer Einrichtung zum Subtrahieren (128) des ersten Blocks von gerundeten transformierten Ausgangswerten von dem weiteren Block von Ausgangswerten, um den zweiten Block von summierten Werten zu erhalten.

**21.** Verfahren zum inversen Umsetzen eines Blocks von ganzzahligen Ausgangswerten und eines zweiten Blocks von summierten Werten, die eine transformierte Darstellung von diskreten Werten sind, um einen ersten und einen zweiten Block der diskreten Werte zu erhalten, wobei der Block von ganzzahligen Ausgangswerten und der zweite Block von summierten Werten aus dem ersten und dem zweiten Block von diskreten Werten abgeleitet sind, durch Verarbeiten (102) eines ersten Blocks von diskreten Werten unter Verwendung einer ersten Transformationsvorschrift, um einen ersten Block von transformierten Werten zu erhalten, Runden (104) des ersten Blocks von transformierten Werten, um einen ersten Block von gerundeten transformierten Werten zu erhalten, Summieren (106) des ersten Blocks von gerundeten transformierten Werten zu einem zweiten Block von diskreten Werten, um den zweiten Block von summierten Werten zu erhalten, Verarbeiten (108) des zweiten Blocks von summierten Werten unter Verwendung einer zweiten Transformationsvorschrift, um einen zweiten Block von transformierten Werten zu erhalten, Runden (110) des zweiten Blocks von transformierten Werten, um einen zweiten Block von gerundeten transformierten Werten zu erhalten, und Subtrahieren (112) des zweiten Blocks von gerundeten transformierten Werten von dem ersten Block von diskreten Werten, um einen Block von ganzzahligen Ausgangswerten der transformierten Darstellung zu erhalten, mit folgenden Schritten:

Verarbeiten (130) des zweiten Blocks von summierten Werten unter Verwendung der zweiten Transformationsvorschrift, um einen ersten Block von transformierten Ausgangswerten zu erhalten; Runden (132) des ersten Blocks von transformierten Ausgangswerten, um einen ersten Block von gerundeten transformierten Werten zu erhalten;

Summieren (134) des ersten Blocks von gerundeten transformierten Ausgangswerten zu dem Block von ganzzahligen Ausgangswerten, um den ersten Block von diskreten Werten zu erhalten;

Verarbeiten (150) des ersten Blocks von diskreten Werten unter Verwendung der ersten Transformationsvorschrift, um einen zweiten Block von transformierten Werten zu erhalten;

Runden (152) des zweiten Blocks von transformierten Werten, um einen Block von gerundeten transformierten Werten zu erhalten; und

Subtrahieren (154) des Blocks von gerundeten transformierten Werten von dem zweiten Block von summierten Werten, um den zweiten Block von diskreten Werten zu erhalten.

**22.** Rück-Transformationsvorrichtung mit folgenden Merkmalen:

einer Vorrichtung nach Anspruch 19 oder 20; und
einer Einrichtung zum inversen Fenstern des ersten und des zweiten Blocks von diskreten Werten unter Verwendung von Lifting-Matrizen (18, 22, 26) und nachfolgender Rundungsoperationen (20, 24, 28), um einen ersten und einen zweiten Block von ursprünglichen Werten zu erhalten, die Audioabtastwerte oder Bildabtastwerte darstellen.

**23.** Rück-Transformationsverfahren mit folgenden Schritten:

einem Verfahren nach Anspruch 21; und
inverses Fenstern des ersten und des zweiten Blocks von diskreten Werten unter Verwendung von Lifting-Matrizen (18, 22, 26) und nachfolgender Rundungsoperationen (20, 24, 28), um einen ersten und einen zweiten Block von ursprünglichen Werten zu erhalten, die Audioabtastwerte oder Bildabtastwerte darstellen.

**24.** Computerprogramm mit einem Programmcode zum Durchführen eines Verfahrens nach Anspruch 17, 18, 21 oder 23, wenn das Computerprogramm auf einem Rechner läuft.

**Claims**

**1.** An apparatus for converting discrete values into a transformed representation with integer values, wherein the discrete values have audio and/or image information, comprising:

a means (102) for processing a first block of discrete values by using a first transformation rule to obtain a first block of transformed values;
a means (104) for rounding the first block of transformed values to obtain a first block of rounded transformed values;
a means (106) for summing the first block of rounded transformed values to a second block of discrete values to obtain a second block of summed values;
a means (108) for processing the second block of summed values by using a second transformation rule to obtain a second block of transformed values;
a means (110) for rounding the second block of transformed values to obtain a second block of rounded transformed values; and
a means (112) for subtracting the second block of rounded transformed values of the first block of discrete values to obtain a block of integer output values of the transformed representation.

**2.** The apparatus according to claim 1, further comprising:

a means (140) for processing the block of integer output values by using a third transformation rule to obtain a block of transformed output values;
a means (142) for rounding the block of transformed output values to obtain a block of rounded transformed output values; and
a means (144) for summing the block of rounded transformed output values and the second block of summed values to obtain a further block of integer output values of the transformed representation.

**3.** The apparatus according to claims 1 or 2, wherein the first transformation rule, the second transformation rule and the third transformation rule, respectively, comprise a transformation matrix.

**4.** The apparatus according to one of the previous claims, wherein
the first transformation rule, the second transformation rule and the third transformation rule, respectively, are identical to one another.

**5.** The apparatus according to one of the previous claims, wherein the first transformation rule and the third transformation rule are a towards transformation rule, while the second transformation rule is a back transformation rule.

**6.** The apparatus according to one of the previous claims, wherein
the means (104) for rounding the first block and the means (110) for rounding the second block and the means (142) for rounding the block of transformed output values, respectively, are formed to round according to the rounding function providing rounded results, the accuracy of which is less than a machine accuracy of a computer comprising the apparatus.

**7.** The apparatus according to one of the previous claims,
wherein the first block of discrete values has discrete values of an ordinal number 0 to an ordinal number N-1,
wherein the second block of discrete values has discrete values of an ordinal number N to an ordinal number 2N-1,
wherein the first block of rounded transformed values has an ordinal number of 0 to N-1 and wherein the means (106) for summing is formed to perform a valuewise addition, so that a value of the block of rounded transformed values with an ordinal number i is added to a value of the second block of discrete values with an ordinal number i+N, wherein i is a running index extending from 0 to N-1.

**8.** The apparatus according to one of the previous claims,
wherein the first block of discrete values has discrete values of an ordinal number 0 to an ordinal number N-1,
wherein the second block of discrete values has discrete values of an ordinal number 0 to an ordinal number 2N-1,
wherein the second block of rounded transformed values has values between an ordinal number N and 2N-1,
wherein the means (112) for subtracting is formed to subtract a value of the block of rounded transformed values with the ordinal number n+i from a value of the first block with the ordinal number i, wherein i is a running index extending from 0 to N-1.

**9.** The apparatus according to one of the previous claims,
wherein the first and second blocks of discrete values comprise integer discrete values.

**10.** The apparatus according to one of the previous claims,
wherein the means (104) for rounding the first block of transformed values or the means (110) for rounding the second block of transformed values are formed to round according to the same rounding specification.

**11.** The apparatus according to claim 3,
wherein the transformation matrix underlying the first transformation rule, the transformation matrix underlying the second transformation rule and the transformation matrix underlying the third transformation rule, respectively, are each a square matrix having a number of lines and columns, respectively, which are equal to a number of discrete values in the first or second blocks.

**12.** The apparatus according to one of the previous claims,
wherein the means (102) for processing according to the first transformation rule and the means (108) for processing according to the second transformation rule are formed in a transformer, and
wherein further a sequence control is provided, which is formed to supply first the first block of discrete values and later the second block of summed values to the transformer.

**13.** The apparatus according to one of the previous claims,
wherein the means (104) for rounding the first block of transformed values and the means (110) for rounding the second block of transformed values are formed in a rounder, and
wherein further a sequence control is provided to supply first the first block of discrete values and later the second block of transformed values to the rounder.

**14.** The apparatus according to one of the previous claims,
wherein the first and second blocks of discrete values are audio samples of first and second channels of a multi-channel audio signal.

**15.** The apparatus according to one of claims 1 to 13,
wherein the first block and the second block are subsequent time samples of an audio signal.

**16.** A towards transformation apparatus, comprising:

a means (16, 18, 20, 22, 24, 26, 28) for windowing a first block of samples representing an audio signal or an image signal, and for windowing a second block of samples representing an audio signal or an image signal by using several lifting matrices (18, 22, 26) and subsequent rounding operations (20, 24, 28) to obtain a first block of discrete values and a second block of discrete values; and

an apparatus according to one of claims 1 to 15 to obtain a transformed representation from the first and second blocks with integer output values.

**17.** A method for converting discrete values into a transformed representation with integer values, wherein the discrete values have audio and/or image information, comprising the steps of:

processing (102) a first block of discrete values by using a first transformation rule to obtain a first block of transformed values;

rounding (104) the first block of transformed values to obtain a first block of rounded transformed values;

summing (106) the first block of rounded transformed values to a second block of discrete values to obtain a second block of summed values;

processing (108) the second block of summed values by using a second transformation rule to obtain a second block of transformed values;

rounding (110) the second block of transformed values to obtain a second block of rounded transformed values; and

subtracting (112) the second block of rounded transformed values from the first block of discrete values to obtain a block of integer output values of the transformed representation.

**18.** A towards transformation method, comprising the steps of:

windowing (16, 18, 20, 22, 24, 26, 28) a first block of samples representing an audio signal or an image signal, and windowing a second block of samples representing an audio signal or an image signal by using several lifting matrices (18, 22, 26) and subsequent rounding operations (20, 24, 28) to obtain a first block of discrete values and a second block of discrete values; and

a method according to claim 17 to obtain a transformed representation from the first and second blocks with integer output values.

**19.** An apparatus for inverse conversion of a block of integer output values and a second block of summed values, which are a transformed representation of discrete values, to obtain first and second blocks of discrete values, wherein the block of integer output values and the second block of summed values are derived from the first and second blocks of discrete values, by processing (102) a first block of discrete values by using a first transformation rule to obtain a first block of transformed values, rounding (104) the first block of transformed values to obtain a first block of rounded transformed values, summing (106) the first block of rounded transformed values to a second block of discrete values to obtain the second block of summed values, processing (108) the second block of summed values by using a second transformation rule to obtain a second block of transformed values, rounding (110) the second block of transformed values to obtain a second block of rounded transformed values, and subtracting (112) the second block of rounded transformed values from the first block of discrete values to obtain a block of integer output values of the transformed representation, comprising:

a means (130) for processing the second block of summed values by using the second transformation rule to obtain a first block of transformed output values;

a means (132) for rounding the first block of transformed output values to obtain a first block of rounded transformed values;

a means (134) for summing the first block of rounded transformed output values to the block of integer output values to obtain the first block of discrete values;

a means (150) for processing the first block of discrete values by using the first transformation rule to obtain a second block of transformed values;

a means (152) for rounding the second block of transformed values to obtain a block of rounded transformed values; and

a means (154) for subtracting the block of rounded transformed values from the second block of summed values to obtain the second block of discrete values.

**20.** The apparatus according to claim 19, wherein a further block of integer output values of the transformed representation is calculated from the second block of summed values by processing (140) the block of integer output values by using a third transformation rule to obtain a block of transformed output values, by rounding (142) the block of transformed output values to obtain a block of rounded transformed output values, and by summing (144) the block of rounded transformed output values and the second block of summed values to obtain the further block of integer output values of the transformed representation, the apparatus further comprising:

a means (124) for processing the block of integer output values by using the third transformation rule to obtain a first block of transformed output values;
a means (126) for rounding the first block of transformed output values to obtain a first block of rounded transformed output values; and
a means for subtracting (128) the first block of rounded transformed output values from the further block of output values to obtain the second block of summed values.

21. A method for inversely converting a block of integer output values and a second block of summed values, which are a transformed representation of discrete values, to obtain first and second blocks of discrete values, wherein the block of integer output values and the second block of summed values have been derived from the first and second blocks of discrete values, by processing (102) a first block of discrete values by using a first transformation rule to obtain a first block of transformed values, rounding (104) the first block of transformed values to obtain a first block of rounded transformed values, summing (106) the first block of rounded transformed values to a second block of discrete values to obtain the second block of summed values, processing (108) the second block of summed values by using a second transformation rule to obtain a second block of transformed values, rounding (110) the second block of transformed values to obtain a second block of rounded transformed values, and subtracting (112) the second block of rounded transformed values from the first block of discrete values to obtain a block of integer output values of the transformed representation, comprising the steps of:

processing (130) the second block of summed values by using the second transformation rule to obtain a first block of transformed output values;
rounding (132) the first block of transformed output values to obtain a first block of rounded transformed values;
summing (134) the first block of rounded transformed output values to the block of integer output values to obtain the first block of discrete values;
processing (150) the first block of discrete values by using the first transformation rule to obtain a second block of transformed values;
rounding (152) the second block of transformed values to obtain a block of rounded transformed values; and
subtracting (154) the block of rounded transformed values from the second block of summed values to obtain the second block of discrete values.

22. A back transformation apparatus, comprising:

an apparatus according to claims 19 or 20; and
a means for inverse windowing of the first and second blocks of discrete values by using lifting matrices (18, 22, 26) and subsequent rounding operations (20, 24, 28) to obtain first and second blocks of original values representing audio samples or image samples.

23. A back transformation method, comprising the steps of:

a method according to claim 21; and
inverse windowing of the first and second blocks of discrete values by using lifting matrices (18, 22, 26) and subsequent rounding operations (20, 24, 28) to obtain first and second blocks of original values representing audio samples or image samples.

24. A computer program with a program code for performing a method according to claims 17, 18, 21 or 23 when the computer program runs on a computer.

**Revendications**

1. Dispositif pour transformer des valeurs discrètes en une représentation transformée avec des valeurs de nombre entier, les valeurs discrètes présentant des informations audio et/ou d'image, aux caractéristiques suivantes :

un dispositif (102) pour traiter un premier bloc de valeurs discrètes à l'aide d'une première règle de transformation, pour obtenir un premier bloc de valeurs transformées ;

un dispositif (104) pour arrondir le premier bloc de valeurs transformées, pour obtenir un premier bloc de valeurs transformées arrondies ;

un dispositif (106) pour additionner le premier bloc de valeurs transformées arrondies avec un deuxième bloc de valeurs discrètes, pour obtenir un deuxième bloc de valeurs additionnées ;

un dispositif (108) pour traiter le deuxième bloc de valeurs additionnées à l'aide d'une deuxième règle de transformation, pour obtenir un deuxième bloc de valeurs transformées ;

un dispositif (110) pour arrondir le deuxième bloc de valeurs transformées, pour obtenir un deuxième bloc de valeurs transformées arrondies ; et

un dispositif (112) pour soustraire le deuxième bloc de valeurs transformées arrondies du premier bloc de valeurs discrètes, pour obtenir un bloc de valeurs de sortie de nombre entier de la représentation transformée.

2. Dispositif selon la revendication 1, présentant, par ailleurs, les caractéristiques suivantes :

un dispositif (140) pour traiter le bloc de valeurs de sortie de nombre entier à l'aide d'une troisième règle de transformation, pour obtenir un bloc de valeurs de sortie transformées ;

un dispositif (142) pour arrondir le bloc de valeurs de sortie transformées, pour obtenir un bloc de valeurs de sortie transformées arrondies ; et

un dispositif (144) pour additionner le bloc de valeurs de sortie transformées arrondies et le deuxième bloc de valeurs additionnées, pour obtenir un autre bloc de valeurs de sortie de nombre entier de la représentation transformée.

3. Dispositif selon la revendication 1 ou 2, dans lequel la première règle de transformation, la deuxième règle de transformation ou la troisième règle de transformation comportent une matrice de transformation.

4. Dispositif selon l'une des revendications précédentes, dans lequel la première règle de transformation, la deuxième règle de transformation ou la troisième règle de transformation sont identiques entre elles.

5. Dispositif selon l'une des revendications précédentes, dans lequel la première règle de transformation et la troisième règle de transformation sont une règle de transformation directe, tandis que la deuxième règle de transformation est une règle de transformation inverse.

6. Dispositif selon l'une des revendications précédentes, dans lequel le dispositif (104) pour arrondir le premier bloc et le dispositif (110) pour arrondir le deuxième bloc ou le dispositif (142) pour arrondir le bloc de valeurs de sortie transformées sont réalisées de manière à arrondir selon une fonction d'arrondi qui fournit des résultats arrondis dont la précision est inférieure à une précision de machine d'un ordinateur qui présente le dispositif.

7. Dispositif selon l'une des revendications précédentes, dans lequel le premier bloc de valeurs discrètes a des valeurs discrètes allant d'un nombre d'ordre 0 à un nombre d'ordre N-1, dans lequel le deuxième bloc de valeurs discrètes a des valeurs discrètes allant d'un nombre d'ordre N à un nombre d'ordre 2N-1, dans lequel le premier bloc de valeurs transformées arrondies a un nombre d'ordre allant de 0 à N-1, et dans lequel le dispositif (106) pour additionner est réalisé de manière à effectuer une addition par valeur, de sorte qu'une valeur du bloc de valeurs transformées arrondies à nombre d'ordre i soit additionnée à une valeur du deuxième bloc de valeurs discrètes à nombre d'ordre i+N, i étant un indice courant qui va de 0 à N-1.

8. Dispositif selon l'une des revendications précédentes, dans lequel le premier bloc de valeurs discrètes a des valeurs discrètes allant d'un numéro d'ordre 0 à un numéro d'ordre N-1, dans lequel le deuxième bloc de valeurs discrètes a des valeurs discrètes allant d'un numéro d'ordre 0 à un nombre d'ordre 2N-1, dans lequel le deuxième bloc de valeurs transformées arrondies a des valeurs comprises entre un nombre d'ordre N et 2N-1, dans lequel le dispositif (112) pour soustraire est réalisé de manière à soustraire une valeur du bloc de valeurs transformées arrondies au nombre d'ordre N+i d'une valeur du premier bloc au numéro d'ordre i, i étant un indice courant qui va de 0 à N-1.

9. Dispositif selon l'une des revendications précédentes,

dans lequel le premier et le deuxième bloc de valeurs discrètes comprennent des valeurs discrètes de nombre entier.

**10.** Dispositif selon l'une des revendications précédentes,
dans lequel le dispositif (104) pour arrondir le premier bloc de valeurs transformées ou le dispositif (110) pour arrondir le deuxième bloc de valeurs transformées sont réalisés de manière à arrondir selon la même règle d'arrondi.

**11.** Dispositif selon la revendication 3, dans lequel la matrice de transformation sur laquelle se base la première règle de transformation, la matrice de transformation sur laquelle se base la deuxième règle de transformation, la matrice de transformation sur laquelle se base la troisième règle de transformation sont, chacune une matrice carrée qui a un nombre de lignes ou de colonnes qui sont identiques à un nombre de valeurs discrètes dans le premier ou le deuxième bloc.

**12.** Dispositif selon l'une des revendications précédentes,
dans lequel le dispositif (102) pour traiter selon la première règle de transformation et le dispositif (108) pour traiter selon la deuxième règle de transformation sont réalisés dans un transformateur, et
dans lequel est prévue, par ailleurs, une commande de déroulement qui est réalisée de manière à alimenter vers le transformateur tout d'abord le premier bloc de valeurs discrètes et par la suite le deuxième bloc de valeurs additionnées.

**13.** Dispositif selon l'une des revendications précédentes,
dans lequel le dispositif (104) pour arrondir le premier bloc de valeurs transformées et le dispositif (110) pour arrondir le deuxième bloc de valeurs transformées sont réalisés dans un dispositif d'arrondi, et
dans lequel est, par ailleurs, prévue une commande de déroulement, pour alimenter vers le dispositif d'arrondi tout d'abord le premier bloc de valeurs discrètes et par la suite le deuxième bloc de valeurs transformées.

**14.** Dispositif selon l'une des revendications précédentes,
dans lequel le premier et le deuxième bloc de valeurs discrètes sont des valeurs de balayage audio d'un premier et d'un deuxième canal d'un signal audio multicanal.

**15.** Dispositif selon l'une des revendications 1 à 13,
dans lequel le premier bloc et le deuxième bloc sont des valeurs de balayage dans le temps successives d'un signal audio.

**16.** Dispositif de transformation directe, aux caractéristiques suivantes :

un dispositif (16, 18, 20, 22, 24, 26, 28) pour diviser en fenêtres un premier bloc de valeurs de balayage qui représentent un signal audio ou un signal d'image, et pour diviser en fenêtres un deuxième bloc de valeurs de balayage qui représentent un signal audio ou un signal d'image, à l'aide de plusieurs matrices d'élévation (18, 22, 26) et d'opérations d'arrondi (20, 24, 28) successives, pour obtenir un premier bloc de valeurs discrètes et un deuxième bloc des valeurs discrètes ; et
un dispositif selon l'une des revendications 1 à 15, pour obtenir une représentation transformée à partir du premier et du deuxième bloc avec des valeurs de sortie de nombre entier.

**17.** Procédé de transformation de valeurs discrètes en une représentation transformée avec des valeurs de nombre entier, les valeurs discrètes présentant des informations audio et/ou d'image, aux étapes suivantes consistant à :

traiter (102) un premier bloc de valeurs discrètes à l'aide d'une première règle de transformation, pour obtenir un premier bloc de valeurs transformées ;
arrondir (104) le premier bloc de valeurs transformées, pour obtenir un premier bloc de valeurs transformées arrondies ;
additionner (106) le premier bloc de valeurs transformées arrondies avec un deuxième bloc de valeurs discrètes, pour obtenir un deuxième bloc de valeurs additionnées ;
traiter (108) le deuxième bloc de valeurs additionnées à l'aide d'une deuxième règle de transformation, pour obtenir un deuxième bloc des valeurs transformées ;
arrondir (110) le deuxième bloc de valeurs transformées, pour obtenir un deuxième bloc de valeurs transformées arrondies ; et
soustraire (112) le deuxième bloc de valeurs transformées arrondies du premier bloc de valeurs discrètes, pour obtenir un bloc de valeurs de sortie de nombre entier de la représentation transformée.

**18.** Procédé de transformation inverse, aux étapes suivantes consistant à :

diviser en fenêtres (16, 18, 20, 22, 24, 26, 28) un premier bloc de valeurs de balayage qui représentent un signal audio ou un signal d'image, et diviser en fenêtres un deuxième bloc de valeurs de balayage qui représentent un signal audio ou un signal d'image, à l'aide de plusieurs matrices d'élévation (18, 22, 26) et des opérations d'arrondi (20, 24, 28) successives, pour obtenir un premier bloc de valeurs discrètes et un deuxième bloc des valeurs discrètes ; et
un procédé selon la revendication 17, pour obtenir une représentation transformée à partir du premier et du deuxième bloc avec des valeurs de sortie de nombre entier.

**19.** Dispositif de transformation inverse d'un bloc de valeurs de sortie de nombre entier et d'un deuxième bloc de valeurs additionnées, qui sont une représentation transformée de valeurs discrètes, pour obtenir un premier et un deuxième bloc de valeurs discrètes, le bloc de valeurs de sortie de nombre entier et le deuxième bloc de valeurs additionnées étant dérivés du premier et du deuxième bloc de valeurs discrètes, en traitant (102) un premier bloc de valeurs discrètes à l'aide d'une première règle de transformation, pour obtenir un premier bloc de valeurs transformées, en arrondissant (104) le premier bloc de valeurs transformées, pour obtenir un premier bloc de valeurs transformées arrondies, en additionnant (106) le premier bloc de valeurs transformées arrondies avec un deuxième bloc de valeurs discrètes, pour obtenir le deuxième bloc de valeurs additionnées, en traitant (108) le deuxième bloc de valeurs additionnées à l'aide d'une deuxième règle de transformation, pour obtenir un deuxième bloc de valeurs transformées, en arrondissant (110) le deuxième bloc de valeurs transformées, pour obtenir un deuxième bloc de valeurs transformées arrondies, et en soustrayant (112) le deuxième bloc de valeurs transformées arrondies du premier bloc de valeurs discrètes, pour obtenir un bloc de valeurs de sortie de nombre entier de la représentation transformée, aux caractéristiques suivantes :

un dispositif (130) pour traiter le deuxième bloc de valeurs additionnées à l'aide de la deuxième règle de transformation, pour obtenir un premier bloc de valeurs de sortie transformées ;
un dispositif (132) pour arrondir le premier bloc de valeurs de sortie transformées, pour obtenir un premier bloc de valeurs transformées arrondies ;
un dispositif (134) pour additionner le premier bloc de valeurs de sortie transformées arrondies avec le bloc de valeurs de sortie de nombre entier, pour obtenir le premier bloc des valeurs discrètes ;
un dispositif (150) pour traiter le premier bloc de valeurs discrètes à l'aide de la première règle de transformation, pour obtenir un deuxième bloc des valeurs transformées ;
un dispositif (152) pour arrondir le deuxième bloc de valeurs transformées, pour obtenir un bloc de valeurs transformées arrondies ; et
un dispositif (154) pour soustraire le bloc de valeurs transformées arrondies du deuxième bloc de valeurs additionnées, pour obtenir le deuxième bloc de valeurs discrètes.

**20.** Dispositif selon la revendication 19, dans lequel est calculé un autre bloc de valeurs de sortie de nombre entier de la représentation transformée à partir du deuxième bloc de valeurs additionnées en traitant (140) le bloc de valeurs de sortie de nombre entier à l'aide d'une troisième règle de transformation, pour obtenir un bloc de valeurs de sortie transformées, en arrondissant (142) le bloc de valeurs de sortie transformées, pour obtenir un bloc de valeurs de sortie transformées arrondies, et en additionnant (144) le bloc de valeurs de sortie transformées arrondies et le deuxième bloc de valeurs additionnées, pour obtenir l'autre bloc de valeurs de sortie de nombre entier de la représentation transformée, et présentant, par ailleurs, les caractéristiques suivantes :

un dispositif (124) pour traiter le bloc de valeurs de sortie de nombre entier à l'aide de la troisième règle de transformation, pour obtenir un premier bloc de valeurs de sortie transformées ;
un dispositif (126) pour arrondir le premier bloc de valeurs de sortie transformées, pour obtenir un premier bloc de valeurs de sortie transformées arrondies ; et
un dispositif pour soustraire (128) le premier bloc de valeurs de sortie transformées arrondies de l'autre bloc de valeurs de sortie, pour obtenir le deuxième bloc des valeurs additionnées.

**21.** Procédé de transformation inverse d'un bloc de valeurs de sortie de nombre entier et d'un deuxième bloc de valeurs additionnées, qui sont une représentation transformée de valeurs discrètes, pour obtenir un premier et un deuxième bloc des valeurs discrètes, le bloc de valeurs de sortie de nombre entier et le deuxième bloc de valeurs additionnées étant dérivés du premier et du deuxième bloc de valeurs discrètes, en traitant (102) un premier bloc de valeurs discrètes à l'aide d'une première règle de transformation, pour obtenir un premier bloc de valeurs transformées, en arrondissant (104) le premier bloc de valeurs transformées, pour obtenir un premier bloc de valeurs transformées arrondies, en additionnant (106) le premier bloc de valeurs transformées arrondies avec un deuxième bloc de valeurs discrètes, pour obtenir le deuxième bloc de valeurs additionnées, en traitant (108) le deuxième bloc de valeurs additionnées à l'aide d'une deuxième règle de transformation, pour obtenir un deuxième bloc de valeurs transformées, en arrondissant (110) le deuxième bloc de valeurs transformées, pour obtenir un deuxième bloc de valeurs transformées arrondies, et en soustrayant (112) le deuxième bloc de valeurs transformées arrondies du premier bloc de valeurs discrètes, pour obtenir un bloc de valeurs de sortie de nombre entier de la représentation transformée, aux étapes suivantes consistant à :

traiter (130) le deuxième bloc de valeurs additionnées à l'aide de la deuxième règle de transformation, pour obtenir un premier bloc de valeurs de sortie transformées ;

arrondir (132) le premier bloc de valeurs de sortie transformées, pour obtenir un premier bloc de valeurs transformées arrondies ;

additionner (134) le premier bloc de valeurs de sortie transformées arrondies au bloc de valeurs de sortie de nombre entier, pour obtenir le premier bloc de valeurs discrètes ;

traiter (150) le premier bloc de valeurs discrètes à l'aide de la première règle de transformation, pour obtenir un deuxième bloc de valeurs transformées ;

arrondir (152) le deuxième bloc de valeurs transformées, pour obtenir un bloc de valeurs transformées arrondies ; et

soustraire (154) le bloc de valeurs transformées arrondies du deuxième bloc de valeurs additionnées, pour obtenir le deuxième bloc de valeurs discrètes.

**22.** Dispositif de transformation inverse, aux caractéristiques suivantes :

un dispositif selon la revendication 19 ou 20 ; et

un dispositif de division en fenêtres inverse du premier et du deuxième bloc de valeurs discrètes à l'aide de matrices d'élévation (18, 22, 26) et d'opérations d'arrondi (20, 24, 28) successives, pour obtenir un premier et un deuxième bloc de valeurs originales qui représentent des valeurs de balayage audio ou des valeurs de balayage d'image.

**23.** Procédé de transformation inverse, aux étapes suivantes :

un procédé selon la revendication 21 ; et

division en fenêtres inverse du premier et du deuxième bloc de valeurs discrètes à l'aide de matrices d'élévation (18, 22, 26) et d'opérations d'arrondi (20, 24, 28) successives, pour obtenir un premier et un deuxième bloc de valeurs originales qui représentent des valeurs de balayage audio ou des valeurs de balayage d'image.

**24.** Programme d'ordinateur avec un code de programme pour la mise en oeuvre d'un procédé selon la revendication 17, 18, 21 ou 23 lorsque le programme d'ordinateur se déroule sur un ordinateur.

## FIG 1

100A — 1. BLOCK VON DISKR. WERTEN

102 —

| EINR. ZUM VERARBEITEN 1. TRANSFORM.-VORSCHRIFT |

1. BLOCK VON TRANSF. WERTEN

104 —

| EINR. ZUM RUNDEN |

1. BLOCK VON GERUND. TRANSF. WERTEN

106

2. BLOCK VON DISKR. WERTEN

100B

| EINR. ZUM SUMMIEREN |

2. BLOCK VON SUMM.WERTEN

108

| EINR. ZUM VERARBEITEN 2. TRANSF.-VORSCHRIFT |

2. BLOCK VON TRANSF.WERTEN

110

| EINR. ZUM RUNDEN |

2. BLOCK VON GER. TRANSF.WERTEN

112

114

| EINR. ZUM SUBTRAHIEREN |

BLOCK VON GANZZAHLIGEN AUSGANGSWERTEN DER TRANSFORMIERTEN DARSTELLUNG

**FIG 2**

120 — 2. BLOCK VON SUMMIERTEN WERTEN

130 — ┌─────────────────────────────┐
│ EINR. ZUM VERARBEITEN       │
│ 2. TRANSF.-VORSCHRIFT        │
└─────────────────────────────┘

1. BLOCK VON TRANSF. WERTEN

┌─────────────────────────────┐
│ EINR. ZUM RUNDEN            │  — 132
└─────────────────────────────┘

1. BLOCK VON GERUNDETEN TRANSF. WERTEN

122

BLOCK VON AUSGANGSWERTEN DER TRANSF. DARSTELLG.

┌─────────────────────────────┐
│ EINR. ZUM SUMMIEREN         │  — 134
└─────────────────────────────┘

ERSTER BLOCK VON DISKRETEN WERTEN — 149

┌─────────────────────────────┐
│ EINR. ZUM VERARBEITEN       │  — 150
│ 2. TRANSFORMATIONS VORSCHR. │
└─────────────────────────────┘

2. BLOCK VON TRANSFORMIERTEN WERTEN

┌─────────────────────────────┐
│ EINRICHTUNG ZUM RUNDEN      │  — 152
└─────────────────────────────┘

2. BLOCK VON GERUNDETEN TRANSFORMIERTEN WERTEN

136

┌─────────────────────────────┐
│ EINRICHTUNG ZUM            │  — 154
│ SUBTRAHIEREN                │
└─────────────────────────────┘

2. BLOCK VON SUMMIERTEN WERTEN

2. BLOCK VON DISKRETEN WERTEN

FIG 3 (UMSETZEN IN TRANSFORMIERTE DARSTELLUNG)

BLOCK VON GANZZAHLIGEN AW

1. BLOCK $X_0$ ... $X_{N-1}$ — 100A

TRANSF.-V. 1 (Z.B. DCT$_{IV}$) — 102

TRANSF.-V. 2 (Z.B. DCT$_{IV}$)

TRANSF.-V. 3 (Z.B. DCT$_{IV}$) — 140

1. BLOCK $Y_0$ ... $Y_{N-1}$ — 114

WEITER BLOCK — 142

2. BLOCK VON SUMMIERTEN WERTEN — 106

2. BLOCK $X_N$ ... $X_{2N-1}$ — 100B

WEITER BLOCK $Y_N$ ... $Y_{2N-1}$ — 146

104  112  110  144

108  N-1  0

FIG 4 (INVERSE UMSETZUNG DER TRANSFORM. DARSTELLG.)

BLOCK VON GANZZ. AW ~134

114 { $Y_0$ ... $Y_{N-1}$ }

BLOCK $X_0$ ... $X_{N-1}$ } 136

132

124 TRANSF.-V. 3 (Z.B. DCT$_{IV}$)

TRANSF.-V. 1 (Z.B. DCT$_{IV}$) ~150

130 TRANSF.-V. 2 (Z.B. DCT$_{IV}$)

126 [·] [·] [·] [·]

[·] [·] [·] [·] ~152

146 { $Y_N$ ... $Y_{2N-1}$ }

$X_N$ ... $X_{2N-1}$ } 156

128  2. BLOCK VON SUMMIERTEN WERTEN  154

EP 1 609 084 B1

# FIG 5

$$X_0 \rightarrow \boxed{\quad DCT_{IV} \quad} \rightarrow Y_0$$
$$X_{N-1} \rightarrow \qquad \rightarrow Y_{N-1}$$

$$X_N \rightarrow \boxed{\quad DCT_{IV} \quad} \rightarrow Y_N$$
$$X_{2N-1} \rightarrow \qquad \rightarrow Y_{2N-1}$$

# FIG 6

## LIFTING-SCHRITT MIT TRANSFORMATIONSMATRIX BEIM UMSETZEN

$x(0)$

$x(n-1)$

TRANSFORMATIONS-MATRIX

$[\cdot]$   $[\cdot]$   $[\cdot]$   $[\cdot]$

$x(n)$   +

+

+

$x(2n-1)$   +

# FIG 7

INVERSER LIFTING-SCHRITT MIT TRANSF.-MATRIX
BEIM INVERSEN UMSETZEN

x(0)

⋮

x(n-1)

TRANSFORMATIONS-
MATRIX

$[\cdot]$  $[\cdot]$  $[\cdot]$  $[\cdot]$

x'(n)

⋮

x'(2n-1)

# FIG 8

$X_0$

⋮

$X_{N/2-1}$

$X_{N/2}$

⋮

$X_{N-1}$

$DCT_{IV}$

$DCT_{IV}$

$Y_0$

⋮

$Y_{N/2-1}$

$Y_{N/2}$

⋮

$Y_{N-1}$

BUTTERFLY-
STUFE

UMSETZUNGS-
STUFE

ROTATIONS-
STUFE

FIG 9

**FIG 10**

# FIG 11

# FIG 12A

402

408

zeitdiskr.

AW

Fenstern mit
Fensterlänge 2N

2N

gefenst.
AW

MDCT

N Spektralwerte
(1. Fenster)

406

50 %
Overlap

404

410

Fenstern
Länge 2N

2N

gefenst.
AW

MDCT

N Spektralwerte
(2. Fenster)

# FIG 12B

412

N SW

1. Fenster

$MDCT^{-1}$

2 N AW 1. Fenster

416

TDAC

N AW

$Y_1(N+k) + Y_2(k)$

414

N SW

1. Fenster

$MDCT^{-1}$

2 N AW

2. Fenster